# EUROPEAN PATENT APPLICATION

(11) **EP 4 738 254 A1**
(43) Date of publication of application: **06.05.2026**
(21) Application number: 25212203.1
(22) Date of filing: 30.10.2025
(51) Int. Cl.: G06T 7/33, G06T 7/73

(54) **METHOD FOR IMAGE REGISTRATION, METHOD FOR DETECTING AND CALLING BASES FROM IMAGES, AND COMPUTER DEVICE**

(30) Priority: 31.10.2024 CN 202411549366; 29.09.2025 CN 202511423061
(71) Applicant: GeneMind Biosciences Company Limited, Shenzhen City, Guangdong 518023 (CN)
(72) Inventor: Zeng, Zhen, Luohu District, Shenzhen City, 518023 (CN); Lan, Chongzhou, Luohu District, Shenzhen City, 518023 (CN); Li, Linsen, Luohu District, Shenzhen City, 518023 (CN); Jin, Huan, Luohu District, Shenzhen City, 518023 (CN); Wan, Xinchun, Luohu District, Shenzhen City, 518023 (CN); Deng, Chengwei, Luohu District, Shenzhen City, 518023 (CN)
(74) Representative: Michalski Hüttermann & Partner Patentanwälte mbB

(57) **Abstract**

The present application discloses methods for registering an image, methods for detection of an image to call bases, and a computer device. The image comes from a system that enables sequencing through microscopic imaging of patterned surfaces. A surface region reflected by the image is a patterned surface, and comprises multiple adjacent marker zones and reaction zones regularly arranged. Each marker zone comprises at least two non-parallel extending directions, and multiple reactive sites are regularly arranged in each direction. Coarse registration is performed by using global features such as a distribution of marker zones on the surface region or a distribution of fiducial points within marker zones, and then fine registration is performed by using local features like a distribution of spots of marker zones, such that positions of the fiducial points can be accurately and reliably determined, thereby achieving high-precision registration of an image with a fiducial template.

## Description

The present application claims priority under the Paris Convention to Chinese patent application Nos. 202411549366.4 and 202511423061.3, filed with the China National Intellectual Property Administration on October 31, 2024, and September 29, 2025, respectively. The entire contents of each of the above applications are incorporated herein by reference in their entirety.

### TECHNICAL FIELD

The present application relates to the field of image processing technology, and in particular to a method for registering an image, a method for calling bases by performing detection on an image, and a computer device.

### BACKGROUND

The subject matter discussed in this section should not be construed as prior art merely by virtue of its inclusion in this section. Similarly, technical problems mentioned in this section or associated with the subject matter provided as background art should not be assumed to have been previously recognized in the prior art. The subject matter in this section merely represents different methods, which themselves may also correspond to specific implementations of the technical solutions included in the claims.

In the related art, so-called sequencing generally refers to a process of determining a primary structure or sequence of a biological polymer, including a nucleic acid such as DNA and RNA, comprising determining the order of nucleotide bases (adenine A, guanine G, thymine T/uracil U, and cytosine C) of a given nucleic acid fragment. Such methods generally include calling bases at one or more positions in a nucleic acid, i.e., performing base calling, to determine the sequence of at least a segment or moiety of the nucleic acid molecule.

A signal and/or signal intensity variation directly or indirectly generated by binding or attachment of a nucleotide/base to a specific position of a nucleic acid molecule to be tested (template) can indicate the type of a base at that position on the nucleic acid molecule. For example, different fluorescent marker molecules may be used to call different incorporated or attached nucleotides/bases. Said nucleotide/base binding or attaching to a specific position of the nucleic acid molecule to be tested is also called nucleotide/base incorporation into the nucleic acid molecule to be tested or base extension, which may be achieved, for example, by polymerization, attachment, hybridization, etc.

Specifically, in a detection system for nucleic acid molecule sequencing based on surface microscopy, a nucleic acid molecule is usually attached to a solid surface. A solid surface containing a chamber that can hold a solution is often called a chip or flow cell. According to a layout design or production process of the solid surface or a distribution of the nucleic acid molecule to be tested on the solid surface, the solid surface may be classified as a patterned surface (or regular array, patterned surface) or a random surface (random array, random surface). A process of acquiring and detecting signals from any surface array, such as capturing images, usually includes moving related hardware such as moving an objective lens and/or moving a solid surface, so as to acquire images of the same object (nucleic acid molecules in the same surface region/field of view) after a relevant biochemical reaction at different moments, and then processing the plurality of images captured at different moments, including signals at positions of corresponding chemical features in the images (such as a nucleic acid molecule to be tested that has undergone an extension reaction), to determine at least a part of sequence information of the nucleic acid molecule to be tested in the field of view.

Relatively speaking, it is generally believed that image registration on patterned surfaces is simpler than on random surfaces, because regular patterns have been introduced into the former during a chip design or preparation stage. This means that a spatial layout of relevant regions or sites is known before imaging, and may be used as a reference image or template or reference frame (or global coordinate system). Therefore, by identifying pattern features on the image and aligning the image with the reference image accordingly, one or more images of the surface field of view can be mapped or unified to the same coordinate system as the reference image to achieve registration.

However, during an actual image acquisition process, since movement of related hardware has a set precision and application or reception of a force may cause a position offset or shape change of a related mechanical structure, and/or a related sequencing biochemical reaction process may involve a temperature increase or decrease, etc. affecting the shape or surface properties of the solid surface, or the number, form or position of some nucleic acid molecules to be tested on the surface, it is inevitable that at least a portion of the nucleic acid molecules to be tested in the same field of view will be shifted or inconsistent in position in a plurality of images, resulting in difficulty directly locating a real position of the nucleic acid molecules to be tested (chemical characteristics) where a relevant biochemical reaction occurs through the acquired images. Therefore, it is generally necessary to perform registration of the plurality of images captured of the same object so that the images are in the same coordinate system, so as to locate positions of the nucleic acid molecules to be tested that have undergone a base extension reaction by using the registered images, and further recognize the type of a base incorporated or extended on the basis of signal changes at those positions. Review articles or patent documents, such as Zitová, B. & Flusser, J. "Image registration methods: a survey." Image and Vision Computing 21(11), 977-1000 (2003)., CN112285070A, EP3336797A1, and CN112288781A, disclose image correction or image registration methods.

Improvement of image registration precision is conducive to the accurate positioning of a corresponding chemical feature position on the image, and signal extraction at that position, which in turn facilitates the accurate recognition of a newly added or extended base or sequence at that position. Therefore, improving the precision and/or efficiency of image registration remains a technical issue worthy of attention.

### SUMMARY

The present application is intended to solve one of the above technical problems, at least to a certain extent, or provide a practical commercial option. Specifically, embodiments of the present application provide a method for registering an image, a system for registering an image, a method for calling bases by performing detection on an image, and a related computer program product or system, specifically as follows:

A first aspect of the present application provides a method for registering an image, the image coming from a detection system for sequencing based on patterned surface microscopy, including: (S10) performing coarse registration on the image on the basis of a fiducial template, comprising: determining positions of a plurality of fiducial points in the image on the basis of reference positions corresponding to the fiducial points in the fiducial template, establishing a fitting relationship on the basis of the positions of the plurality of fiducial points, and updating the positions of the fiducial points in the image on the basis of the fitting relationship, wherein the fiducial template includes a reference coordinate system and reflects the same surface region as the image; the surface region includes a plurality of adjacent marker zones and reaction zones, wherein the marker zones are provided with a plurality of discrete reactive sites regularly distributed in two or more non-parallel directions, and an intersection of the directions is located in the marker zones; the marker zones exhibit a specific intensity variation feature in a detection signal curve thereof in the marker zone and adjacent reaction zones in each of the directions of the marker zones in which the regularly distributed reactive sites are provided (in other words, the marker zone or any direction thereof, together with the surrounding reaction zones, exhibits a specific intensity variation feature on the corresponding detection signal curve); a fiducial point is located at the intersection of the directions of the marker zones, and is located by means of the intensity variation feature; at least a portion of the reactive sites appear as bright spots on the image, and the number of the bright spots is greater than the number of the fiducial points; and (S20) performing fine registration on the image on the basis of a coarse registration result and the bright spots, comprising: determining a bright spot distribution in each of the directions of the marker zones, determining a fitting relationship in each of the directions on the basis of the bright spot distribution, and further updating the fiducial point positions of the image on the basis of the fitting relationships; and determining coordinates of other regions or positions of the image on the basis of the updated fiducial point positions to register the image with the fiducial template.

An embodiment of the present application further provides a system for registering an image, where the system can implement the method for registering an image or the steps in the method in any of the foregoing embodiments. The system includes a coarse registration module and a fine registration module connected to each other. The coarse registration module is configured to perform coarse registration on an image on the basis of a fiducial template, comprising: determining positions of a plurality of fiducial points in the image on the basis of reference positions corresponding to the fiducial points in the fiducial template, establishing a fitting relationship on the basis of the positions of the plurality of fiducial points, and updating the positions of the fiducial points in the image on the basis of the fitting relationship, where the fiducial template includes a reference coordinate system and reflects the same surface region as the image; the surface region includes a plurality of adjacent marker zones and reaction zones, where the marker zones are provided with a plurality of discrete reactive sites regularly distributed in two or more non-parallel directions, and an intersection of the directions is located in a marker zone; the marker zones exhibit a specific intensity variation feature in a detection signal curve thereof in the marker zone and adjacent reaction zones in each of the directions of the marker zones in which the regularly distributed reactive sites are provided; a fiducial point is located at the intersection of the directions of the marker zones, and is located by means of the intensity variation feature; at least a portion of the reactive sites appear as bright spots on the image, and the number of the bright spots is greater than the number of the fiducial points. The fine registration module is configured to perform fine registration on the image on the basis of a coarse registration result and the bright spots, comprising: determining a bright spot distribution in each of the directions of the marker zones, and determining a fitting relationship in each of the directions on the basis of the bright spot distribution, and further updating the fiducial point positions of the image on the basis of the fitting relationships; and determining coordinates of other regions or positions of the image on the basis of the updated fiducial point positions to register the image with the fiducial template.

A second aspect of the present application provides a method for calling a base by performing detection on an image, the image being derived from a detection system for sequencing based on patterned surface microscopy, and a surface region reflected by the image including a plurality of adjacent marker zones and reaction zones. The method includes: determining a signal intensity value of a position corresponding to a chemical feature in a reaction zone of the image, where the image is an image registered by using the method in any embodiment of the present application; recognizing the type of a base introduced at the position on the basis of the signal intensity value.

A third aspect of the present application provides a computer device, including: a memory used to store data, including a computer-executable program; and a processor, used to execute the computer-executable program. Executing the computer-executable program includes implementing the method for registering an image and/or the method for performing detection on an image to call a base in any of the foregoing embodiments.

The present application further provides a computer-readable storage medium for storing a computer-executable program. Executing the computer-executable program includes completing the method for registering an image and/or the method for performing detection on an image to call a base in any of the foregoing embodiments or examples.

In the method and system for image registration, the method for base calling, and the computer product or device in any of the foregoing embodiments, the image comes from a detection system for sequencing based on patterned surface microscopy, and the surface region reflected by the image is a regular patterned surface including a plurality of adjacent marker zones and reaction zones arranged in a regular manner, each marker zone includes at least two non-parallel extending directions, and a plurality of reactive sites are regularly arranged in each direction. The registration method, system, or device includes performing coarse registration on the image on the basis of the fiducial template, and performing fine registration of the image on the basis of the coarse registration result and the bright spots. Specifically, in the coarse registration stage, the fiducial template is used to determine a region range where each fiducial point is most likely to be located, and the specific intensity variation features exhibited by the marker zones and the adjacent reaction zones thereof in the directions of the marker zones are used to quickly locate the fiducial points in the region ranges, and the positions of the fiducial points are coarsely corrected to achieve pixel-level registration. In the fine registration stage, the distribution of bright spots in the marker zones is used to further correct the positions of the fiducial points to achieve finer-granularity such as sub-pixel image registration. The method, system, or device in the embodiments utilize fiducial template such as layout information of the patterned surface region such as shape, pattern, and other characteristics, as well as such characteristics combined with information or signal differences or changes reflected in the image by biochemical reaction signals, to perform coarse registration by using global features such as the distribution of marker zones on the surface region or the fiducial points within the marker zones, and then perform fine registration by using local features such as the distribution of bright spots in the marker zone. This allows for accurate and reliable determination of the positions of the fiducial points, and further determination of the coordinates of other regions or positions of the surface region reflected by the image, thereby achieving high-precision registration of the image with the fiducial template.

Specifically, the present disclosure provides the following subject matter/items:
1. A method for image registration, the image coming from a detection system for sequencing based on patterned surface microscopy, characterized by comprising:
   (S10) performing coarse registration on the image on the basis of a fiducial template, comprising:
   determining positions of a plurality of fiducial points in the image on the basis of reference positions corresponding to the fiducial points in the fiducial template, establishing a fitting relationship on the basis of the positions of the plurality of fiducial points, and updating the positions of the fiducial points in the image on the basis of the fitting relationship, wherein
   the fiducial template comprises a reference coordinate system and reflects the same surface region as the image;
   the surface region comprises a plurality of adjacent marker zones and reaction zones, the marker zones being provided with a plurality of discrete reactive sites regularly distributed in two or more non-parallel directions, and an intersection of the directions being located in the marker zone; the marker zones exhibit a specific intensity variation feature in a detection signal curve thereof in the marker zone and adjacent reaction zones in each of the directions of the marker zone in which the regularly distributed reactive sites are provided;
   the fiducial point is located at the intersection of the directions of the marker zone and is located by means of the intensity variation feature; at least a portion of the reactive sites appear as bright spots on the image, and the number of the bright spots is greater than the number of the fiducial points; and
   (S20) performing fine registration on the image on the basis of a coarse registration result and the bright spots, comprising: determining a bright spot distribution in each of the directions of the marker zones, determining a fitting relationship in each of the directions on the basis of the bright spot distribution, and further updating the fiducial point positions of the image on the basis of the fitting relationships; and
   determining coordinates of other regions or positions of the image on the basis of the updated fiducial point positions, to register the image with the fiducial template.
2. The method according to item 1, wherein the size of the marker zones does not exceed 10% of the surface region.
3. The method according to item 1, wherein at least a portion of the reaction zones are discrete, and the marker zones are present between two adjacent reaction zones.
4. The method according to item 1, wherein at least a portion of the marker zones are discrete, and the reaction zones are present between two adjacent marker zones.
5. The method according to any of items 1 to 4, wherein the reaction zones are provided with a plurality of regularly distributed discrete reactive sites, and at least a portion of the reactive sites in the reaction zone appear as bright spots on the image.
6. The method according to item 5, wherein the reactive sites in the reaction zone and the marker zone are each independently presented as a depression.
7. The method according to item 5, wherein the reactive sites in the reaction zones are more densely distributed than the reactive sites in the marker zones; optionally, the size of a single reactive site in the reaction zones is smaller than the size of a single reactive site in the marker zones.
8. The method according to any of items 1 to 7, wherein (S10) comprises: (a) calculating reference positions corresponding to the fiducial points in the fiducial template; (b) determining a detection signal curve of a predetermined region in the image where the reference positions are located, wherein the predetermined region comprises the intersection of the directions of the marker zones and a portion of reaction zones adjacent to the directions; and (c) identifying the intensity variation features of the detection signal curve, and determining the positions of the fiducial points on the basis of positions corresponding to the intensity variation features.
9. The method according to item 8, wherein the plurality of marker zones are regularly distributed along two or more non-parallel straight lines in the surface region, and (S10) further comprises: (d1) establishing a fitting relationship in a corresponding direction by using position components of the fiducial points in each of the directions; (e1) performing binary classification on the fiducial points according to a preset condition, and updating the fitting relationship in the corresponding direction on the basis of position components of fiducial points in a designated category after the binary classification, wherein the preset condition is related to a distance between the fiducial point and the fitting relationship; and (f1) correcting position components of fiducial points in another category on the basis of the updated fitting relationship.
10. The method according to item 9, wherein the preset condition comprises a plurality of distance thresholds that converge gradually from large to small, the plurality of distance thresholds comprise a maximum distance threshold D1 and a second-greatest distance threshold D2, and (e1) comprises,
   (e11) performing binary classification on the fiducial points according to the distance threshold D1, comprising classifying fiducial points having a distance from the fitting relationship less than or equal to the distance threshold D1 into the designated category, and classifying fiducial points having a distance from the fitting relationship greater than the distance threshold D1 into a category other than the designated category;
   (e12) updating the fitting relationship in the corresponding direction by using position components of the fiducial points in the designated category after (e11) in each of the directions;
   (e13) performing binary classification on the fiducial points in the designated category after (e11) according to the distance threshold D2, comprising classifying fiducial points having a distance from the fitting relationship after (e12) less than or equal to the distance threshold D2 into the designated category, and classifying fiducial points having a distance from the fitting relationship after (e12) greater than the distance threshold D2 into another category; and
   (e14) updating the fitting relationship in the corresponding direction by using position components of the fiducial points in the designated category after (e13) in each of the directions.
11. The method according to item 8, wherein the plurality of marker zones are distributed along a regular curve in the surface region, and (S10) further comprises:
   (d2) establishing a corresponding curve fitting relationship by using the positions of the fiducial points;
   (e2) performing binary classification on the fiducial points according to a preset condition, and updating the corresponding curve fitting relationship on the basis of positions of fiducial points in a designated category after the binary classification, wherein the preset condition is related to a distance between the fiducial point and the curve fitting relationship; and
   (f2) correcting positions of fiducial points in another category on the basis of the updated curve fitting relationship.
12. The method according to item 11, wherein the preset condition comprises a plurality of distance thresholds that converge gradually from large to small, the plurality of distance thresholds comprises a maximum distance threshold D1 and a second-greatest distance threshold D2, and (e2) comprises:
   (e21) performing binary classification on the fiducial points according to the distance threshold D1, comprising classifying fiducial points having a distance from the curve fitting relationship less than or equal to the distance threshold D1 into the designated category, and classifying fiducial points having a distance from the curve fitting relationship greater than the distance threshold D1 into a category other than the designated category;
   (e22) updating the curve fitting relationship according to positions of the fiducial points in the designated category after (e21);
   (e23) performing binary classification on the fiducial points in the designated category after (e21) according to the distance threshold D2, comprising classifying fiducial points having a distance from the curve fitting relationship after (e22) less than or equal to the distance threshold D2 into the designated category, and classifying fiducial points having a distance from the curve fitting relationship after (e22) greater than the distance threshold D2 into another category; and
   (e24) updating the curve fitting relationship according to positions of the fiducial points in the designated category after (e23).
13. The method according to any of items 1 to 12, wherein (S20) comprises:
   (S22) determining a bright spot distribution in each of the directions of the marker zones on the basis of the positions of the fiducial points after (S10) and the fiducial template, comprising identifying bright spots in a plurality of regions in each of the directions;
   (S24) determining a fitting relationship in each of the directions according to the bright spot distribution in the direction, and screening the bright spots to optimize the fitting relationship;
   (S26) further updating the fiducial point positions of the image on the basis of the fitting relationship after (S24), and determining coordinates of other regions or positions of the image according to the further updated fiducial point positions to register the image with the fiducial template.
14. The method according to item 13, wherein (S22) comprises:
   determining, by using position components of the fiducial points in the direction after (S10) and a relative positional relationship between the fiducial points and the bright spots included in the reference coordinate system, a pixel range k1 × k2 where a bright spot is possibly located in each of a plurality of regions in each of the directions, wherein k1 and k2 are each independently an odd number greater than 1; and
   identifying, according to a difference in pixel size between a central pixel and surrounding pixels, a bright spot in the pixel range k1 × k2 where a bright spot is possibly located.
15. The method according to item 13 or 14, wherein the preset condition in (S10) is a first preset condition, and (S24) comprises screening the bright spots according to a second preset condition and updating the fitting relationship in the direction on the basis of bright spots retained after screening, wherein the second preset condition is related to distances from the bright spots to the fitting relationship.
16. The method according to item 15, wherein the second preset condition comprises a plurality of distance thresholds that converge gradually from large to small, the plurality of distance thresholds comprise a maximum distance threshold D21 and a second-greatest distance threshold D22, and (S24) comprises:
   (S241) screening the bright spots according to the distance threshold D21, comprising retaining bright spots having a distance from the fitting relationship less than or equal to the distance threshold D21, and
   optionally discarding bright spots having a distance from the fitting relationship greater than the distance threshold D21;
   (S243) updating the fitting relationship by using bright spots retained after (S241);
   (S245) screening the bright spots retained after (S241) according to the distance threshold D22, comprising retaining bright spots having a distance from the fitting relationship after (S243) less than or equal to the distance threshold D22, and optionally discarding bright spots having a distance from the fitting relationship after (S243) greater than the distance threshold D22; and
   (S247) updating the fitting relationship by using the bright spots retained after (S245).
17. The method according to any of items 8 to 16, wherein at least one of the following steps or processes (i) to (iv) is performed in parallel:
   (i) the process of determining the positions of the plurality of fiducial points in the image in (S10) of item 8;
   (ii) the process of updating each fitting relationship in each direction in (S10) of item 9 or 10;
   (iii) the process of optimizing each fitting relationship in (S20) of item 13;
   (iv) the process of determining the coordinates of the other regions or positions of the image on the basis of the further updated fiducial point positions in (S26) of (S20) of item 13.
18. A method for calling bases by image detection, the image coming from a detection system for sequencing based on patterned surface microscopy, and a surface region reflected by the image comprising a plurality of adjacent marker zones and reaction zones, characterized by comprising: determining a signal intensity value of a position corresponding to a chemical feature in a reaction zone of the image, wherein the image is an image registered by using the method according to any of items 1 to 17; and
   calling the type of a base introduced at the position on the basis of the signal intensity value.
19. The method according to item 18, wherein the signal intensity value is a corrected signal intensity value.
20. A computer device, comprising: a memory, used to store an application program and data generated by execution of the application program; a processor, used to execute the application program, so as to implement the method for registering an image according to any one of items 1 to 17, and/or the method for calling bases by image detection according to item 18 or 19.
21. The computer device according to item 20, wherein the processor comprises at least one processing unit set, each processing unit in the processing unit set is capable of processing in parallel, and the processing unit set is used to perform at least the following steps or processes:
   (i) determining the positions of the plurality of fiducial points in the image when performing (S10) of the method for registering an image according to item 8;
   (ii) updating each fitting relationship in each direction when performing (S10) of the method for registering an image according to item 9 or 10;
   (iii) optimizing each fitting relationship when performing (S20) of the method for registering an image according to item 13;
   (iv) determining the coordinates of the other regions or positions of the image according to the further updated fiducial point positions when performing (S26) in (S20) of the method for registering an image according to item 13.

### BRIEF DESCRIPTION OF THE DRAWINGS

The above embodiments and/or additional technical features and advantages of the present application will become obvious and easy to understand in conjunction with the description of the embodiments with reference to the following drawings.
FIG. 1 is a schematic diagram of a flowchart of a method for registering an image according to an embodiment;
FIG. 2 is a schematic diagram of a surface pattern according to an embodiment, including 2a and 2b;
FIG. 3 is a schematic diagram of a grid surface pattern according to an embodiment;
FIG. 4 is a schematic diagram of a surface pattern according to an embodiment;
FIG. 5A-5B respectively illustrate the image region (range) formed by a marker zone or the intersection in non-parallel directions of a marker zone and the adjacent reaction zones, along with a detection signal curve for the image region according to an embodiment;
FIG. 6 is a schematic diagram showing a W-shaped intensity variation feature on a detection signal curve according to an embodiment;
FIG. 7 is a schematic flowchart of coarse registration according to an embodiment;
FIG. 8 is a partial image of a marker zone and reaction zones adjacent thereto in various directions according to an embodiment;
FIG. 9 is a schematic flowchart of fine registration according to an embodiment; and
FIG. 10 is a schematic flowchart of a method for performing detection on an image to call a base according to an embodiment of the present application.

### DETAILED DESCRIPTION

The present invention is further described in detail below through specific embodiments with reference to the accompanying drawings. Similar elements in different embodiments are labeled with the same or similar element numerals. In the following embodiments, many details are described to provide a better understanding of the present application. Those skilled in the art would appreciate that, in different implementations, some of the features may be omitted, or may be replaced by other elements, materials, means, or methods. In addition, for process or operation details that are not explained or described in detail in some embodiments, those skilled in the art can understand or implement the details on the basis of the context or relevant example descriptions and/or conventional technical knowledge in the art.

In addition, the characteristics, operations, or features described in the description may be combined in any appropriate manner to form various embodiments. Moreover, the steps or actions in the method description may also be exchanged or adjusted in order in a manner that can be foreseen by those skilled in the art. In other words, unless otherwise specified, the various orders in the description and drawings are for the purpose of clearly describing a certain embodiment and do not necessarily imply a fixed order of operation or implementation.

The terms "first", "second", etc. herein are used for descriptive purposes only and should not be understood as indicating or implying relative importance or implicitly indicating the number or order of the indicated technical features. Unless otherwise specified herein, the definitions "a", "an", etc. introduced in singular forms, especially due to language translation habits, include plural referents thereof, that is, include one or more; "a set" or "a plurality of" means two or more. Furthermore, the words "comprise," "include," and "have" and any variations thereof are intended to cover a non-exclusive inclusion. For example, a process, method, system, product, or device including a series of steps or units is not limited to the listed steps or units and may also include steps or units that are not listed.

Unless otherwise specified, the terms "couple", "ligation", "in connection" and "connected" herein should be understood in a broad sense, for example, the connection may be fixed connection, detachable connection, or integral connection; or may be mechanical connection, electrical connection, or communication with each other; or may be direct connection or indirect connection via an intermediate medium, or may be internal communication between two elements or interaction between two elements; or may be connection through physical adsorption or other forces, or chemical connection through chemical bonds such as incorporation through polymerization reaction. Those skilled in the art can understand the specific meaning of the terms in the corresponding example on the basis of the description of the specific embodiments including the context and common general knowledge.

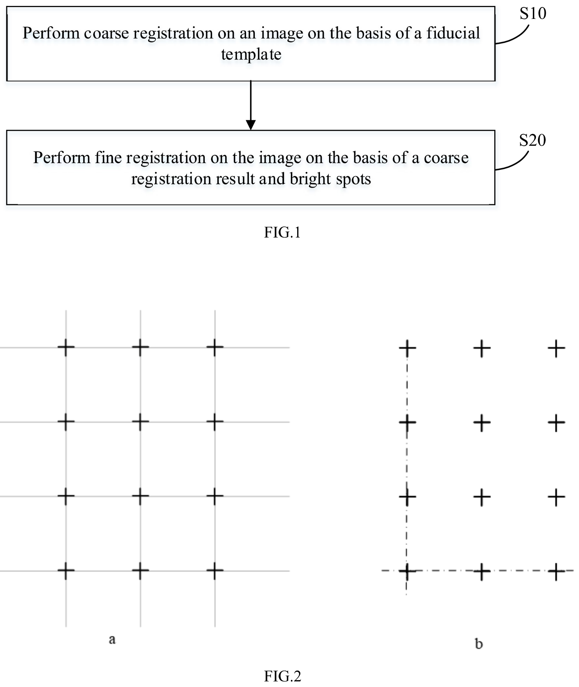

Referring to FIG. 1, some embodiments of the present application provide a method for registering an image. The image to be registered is derived from a detection system for sequencing based on patterned surface microscopy. Accurate registration of the image is achieved through coarse registration and fine registration.

Specifically, in some embodiments, the method includes the following steps (S10) and (20): (S10) Perform coarse registration on the image on the basis of a fiducial template, including determining positions of a plurality of fiducial points in the image on the basis of reference positions corresponding to the fiducial points in the fiducial template, establishing a fitting relationship on the basis of the positions of the plurality of fiducial points, and updating the positions of the fiducial points in the image on the basis of the fitting relationship. The fiducial template includes a reference coordinate system and reflects the same surface region as the image. The surface region includes a plurality of adjacent marker zones and reaction zones, where the marker zone is provided with a plurality of discrete reactive sites regularly distributed in two or more non-parallel directions, and an intersection of the directions is located in the marker zone. The marker zone or any direction thereof, together with the surrounding reaction zones, forms a detection region whose corresponding detection signal curve exhibits a specific intensity variation feature. The so-called fiducial point is located at the intersection of the directions of the marker zone and is located by using the intensity variation feature. At least a portion of the reactive sites appear as bright spots on the image, and optionally the number of the bright spots is greater than the number of the fiducial points.
And (S20) Perform fine registration on the image on the basis of a coarse registration result and the bright spots, including determining a bright spot distribution for each of the directions of the marker zone, and determining a respective fitting relationship in each of the directions on the basis of the bright spot distribution, and further updating the fiducial point positions of the image on the basis of the fitting relationships; and determining coordinates of other regions or positions of the image on the basis of the updated fiducial point positions to register the image with the fiducial template.

The so-called detection system for sequencing based on patterned surface microscopy imaging, also called a sequencing system, refers to a detection system that converts relevant biochemical signals into image information through optical microscopy, and determines the order of base arrangement in a primary structure of a nucleic acid molecule on the basis of processing and analysis of the image information. Such detection system includes one or more microscopic imaging apparatus or systems that can acquire luminescence information from a surface and image a surface region where the target nucleic acid molecules are attached/immobilized. The detection system may be implemented by utilizing sequencing principles such as sequencing by synthesis (SBS), sequencing by ligation (SBL), or sequencing by hybridization (SBH), etc.

Optional detection system(s) include, but are not limited to, Illumina's Miseq^{™}, Nextseq^{™}, and Novaseq^{™} sequencing platforms, Thermo Fisher/Life Technologies's Ion Torrent^{™} platform, MGI's BGISEO^{™} and MGISEQ^{™}/DNBSEQ^{™} platforms, single-molecule sequencing platforms with microscopic imaging systems, and self-built sequencing platforms with microscopic imaging systems. A sequencing method may be single-end sequencing, double-end sequencing, or sequencing methods supported by a sequencing platform constructed or selected, etc.

An object of microscopic imaging of the detection system, the patterned surface, also referred to herein as patterned array, is a regular array, which is a regular solid substrate surface carrying the target nucleic acid molecules. The regular array is connected to the detection system in a loadable and unloadable manner. Thousands or more discrete positions or sites at which the target nucleic acid molecules can be attached are regularly arranged in the surface region or a corresponding imaging field of view. Those discrete positions or sites at which the target nucleic acid molecule can be attached are also called reactive sites in some embodiments of the present application. It can be appreciated that during sequencing imaging detection, at least a portion of reactive sites to which the target nucleic acid molecules are attached appear as bright points or bright spots on the image, that is, spots having a signal intensity (pixel value or grayscale value) greater than that of image background. In some embodiments, bright points or spots are also often referred to as spots.

The so-called nucleic acid molecule to be tested (the target nucleic acid molecule), also referred to as a nucleic acid template or a template, may be a single molecule without amplification, or a molecular cluster or group or a long strand containing a plurality of identical polynucleotide molecules after amplification, such as a fluorescent cluster (cluster) or a DNA nanoball (DNB) formed by bridge amplification or rolling circle amplification used in current mainstream sequencing platforms available on the market. The target nucleic acid molecule may be in the form of a single strand, a double strand, and/or a complex hybridized with the probe or primer.

Referring to FIG. 2 to FIG. 4, in some embodiments, a plurality of adjacent marker zones and reaction zones are regularly arranged or distributed in the surface region or the corresponding imaging field of view (FOV) to form a surface pattern. The so-called reaction zones (reaction regions) herein refer to a main place or region for carrying out sequencing-related biochemical reactions and collecting corresponding signals, and the marker zones (marker/ labeling/ tagging regions) are mainly for labeling or tracing purposes, e.g., to facilitate positioning, image alignment, etc. In some embodiments, the marker zone is also referred to as a marker line or a tracer line (trackline) according to a linear shape or pattern feature included in the marker zone. Generally, the area of the reaction zones is much larger than that of the marker zones, for example, the size of the reaction zones accounts for 90% or more of the surface region, and the size of the marker zones accounts for 10% or less of the surface region. Moreover, the marker zone and the reaction zone exhibit significantly different signal features during image acquisition and signal detection processes, such as significantly different pattern features, signal change patterns, and/or signal intensities.

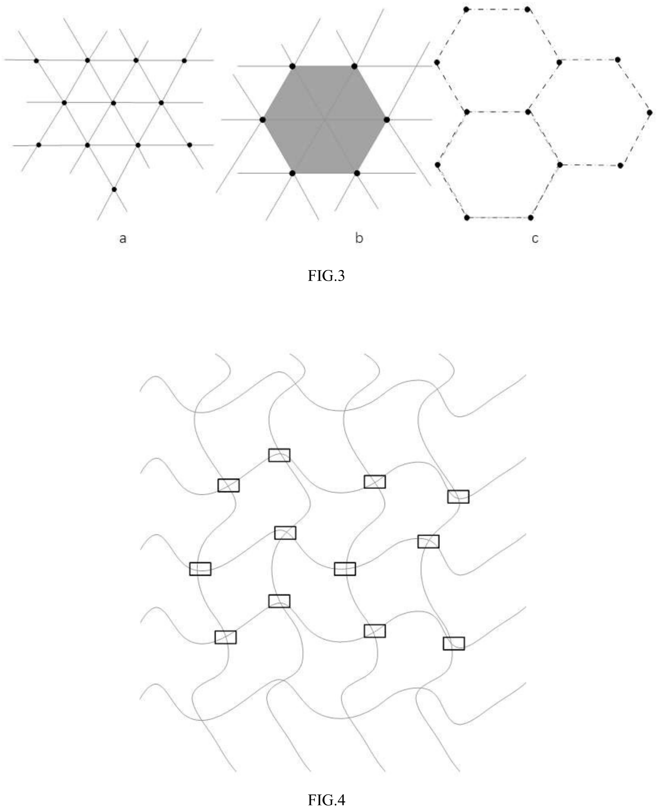

In addition, referring to FIG. 2 or FIG. 3, adjacent reaction zones may be either in communication with or isolated from each other (may be connected or separated/discrete), and the same may apply to adjacent marker zones. In some examples, the reaction zones on the surface are discrete, and there are communicating marker zones between adjacent reaction zones. In other examples, the marker zones are discrete, and there are communicating reaction zones between adjacent marker zones. In some other examples, a part of the reaction zones are discrete, while another part of the reaction zones are non-discrete or communicating surfaces, there are communicating marker zones between adjacent discrete reaction zones, and there are discrete marker zones between adjacent non-discrete reaction zones.

From an overall perspective of the surface region or the corresponding imaging field of view, the plurality of marker zones distributed in the surface region form one or more regular shapes or patterns, for example, a regular pattern including one or more straight lines and/or curves, specifically, e.g., a grid pattern, a triangular pattern, a circular or wavy line pattern including a plurality of intersecting straight lines or curves, etc. The regular shapes or patterns have one or more directions. All or most of the marker zones in the surface region or the corresponding imaging field of view are isomorphic, that is, the shapes, sizes, and orientations (of these marker zones) are all consistent. Accordingly, the same sites or positions in the marker zones form a corresponding regular pattern or curve on this surface region. The regular distribution of the plurality of marker zones on the surface region or the regular distribution of the same positions of the plurality of marker zones on the surface region is a feature or one of features on which the method for registering an image, especially the coarse registration step, is based. This will be further illustrated in the following relevant embodiments in conjunction with an implementing or implementation process of (S10).

Each marker zone is provided with a plurality of discrete reactive sites that are regularly distributed in two or more non-parallel directions, and an intersection of the plurality of non-parallel directions is located in the marker zone. In other words, each marker zone has at least two non-parallel extending directions, and the intersection of the plurality of directions is located in the marker zone. In some examples, each marker zone appears as a region including a plurality of intersecting straight lines or curves (in the extending directions), referring to FIG. 2 and FIG. 4, for example, as a "V" shape, an "×" shape, a "cross" shape, a "T" shape, a "↓" shape, a " 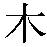 " shape, a " 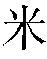 " shape, etc.

In combination with the above description on the reactive sites, it can be understood that at least a portion of the reactive sites in the marker zone appear as bright spots on the image. The regularly distributed reactive sites or corresponding bright spots in all of the directions of the marker zones form a regular shape or pattern. The regular distribution of the plurality of reactive sites or corresponding bright spots in all of the intersecting directions of the marker zones is a feature or one of features on which the method for registering an image, especially the fine registration step, is based. This will be further illustrated in conjunction with an implementing or implementation process of (S20) in the relevant embodiments below.

In some examples, the reaction zones are also provided with a plurality of regularly distributed discrete reactive sites. It can also be understood that reactive sites in at least a portion of the reaction zones also appear as bright spots on the image. The reactive sites have specific structures and/or specific surface properties so that the target nucleic acid molecule can be attached to corresponding site positions. In some examples, the reactive sites of the reaction zones and the marker zones are each independently present as a depression structure, such as a hole or well, etc. of micrometer or nanometer size. Moreover, the distribution of the reactive sites in the reaction zones is denser than that in the marker zones. And/or, the size of a single reactive site in the reaction zone is smaller than that of a single reactive site in the marker zone, but the number of reactive sites is several orders of magnitude greater than that in the marker zone, and a distance between adjacent reactive sites is smaller than that in the marker zone. The reactive sites or corresponding bright spots within the reaction zone constitute the primary regions or positions relied upon for base identification and sequence acquisition. In essence, the primary objective of precise image registration is to accurately identify these positions, thereby enabling the accurate identification of base types based on signal intensity at these locations.

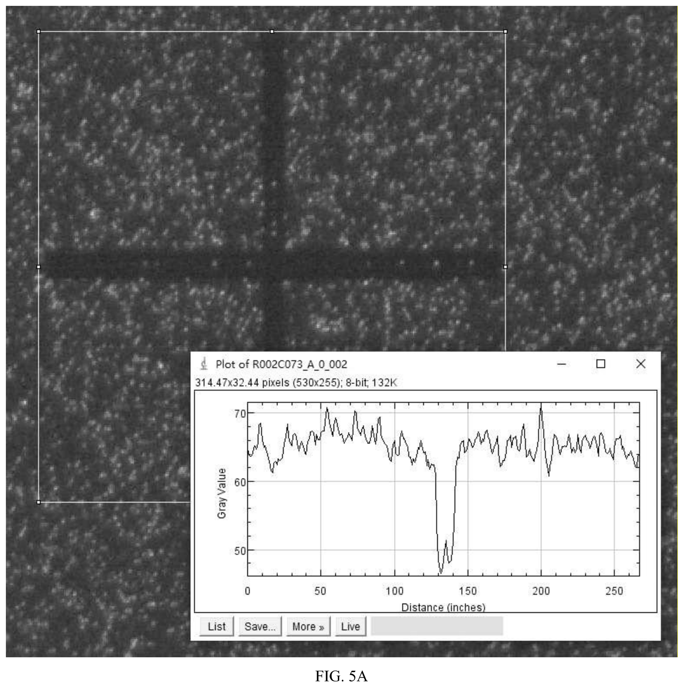

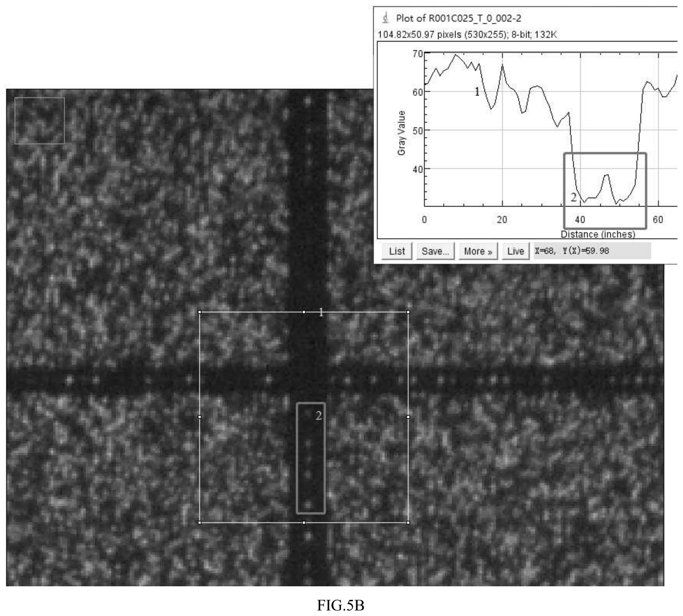

In combination with the description of the structure and shape of the reaction zone and/or marker zone described above, if the differences between the marker zone and the reaction zone are viewed from another perspective, for example, from the perspective of detected signals, such as relative intensities thereof reflected in image or image features or image signals, it can be said that each marker zone exhibits a specific intensity variation feature in a detection signal curve in the marker zone and adjacent reaction zones in each of the directions of the marker zone in which the regularly distributed reactive sites are provided. That is, there is a clear difference between signals acquired from the reaction zone and the marker zone. For example, the signal intensity may rise/increase or fall/decrease sharply during transition from a reaction zone (or reaction-dominated region) to a marker zone (or marker-dominated region) and/or from a marker zone to a reaction zone. Accordingly, a curve can be formed by unit surface region signals continuously acquired during movement in a direction of regular distribution of a marker zone or in any direction thereof, transitioning from a reaction zone to the marker zone and then to an adjacent reaction zone, or a boundary or transition region of reaction zone 1 to marker zone 1 to reaction zone 2, generally will show a specific intensity variation feature on the signal curve. Or put another way, when the scanning path passes through a transition region from one reaction region (or reaction-dominated region) to a labeling region (or labeling-dominated region) and then to an adjacent reaction region (or reaction-dominated region), that is, across the boundary or transition zone of "1^{st} reaction region - 1^{st} labeling region - 2^{nd} reaction region," a specific intensity variation feature generally appears on the signal curve. The so-called "specific intensity variation feature" refers to the manifestation, on the detected signal curve, of the signal difference between the reaction zones and the marker regions. The particular shape or profile of such a feature is related to the respective signal characteristics or signal intensity differences exhibited by the reaction zones and labeling zones in the image. FIGs 5A and 5B respectively illustrate an image region formed by a marker zone (either the entire or a portion thereof) and the adjacent reaction zones, as well as a detection signal curve corresponding to the image region. Specifically, in FIGs 5A and 5B, the marker zone has a cross-shaped structure and is adjacent, in each extending direction, to four reaction zones. The rectangular area formed by the marker zone (or the portion thereof containing the intersection) and portions of the four adjacent reaction zones, as well as the detection signal curve corresponding to that rectangular area, are illustrated. The image region (sampling region or boxed area) shown in FIG 5A includes the entire marker zone and parts of multiple adjacent reaction zones in each direction, and is larger than the sampling region illustrated in FIG 5B (The sampling area in FIG 5B encompasses the intersection within the marker zone and portions of the adjacent reaction zones.).

The present application imposes no particular limitation on the sampling of the image region or the plotting or acquisition of its corresponding detection signal curve. In the embodiments illustrated herein, the detection signal curves were plotted using the ImageJ software (imagej.net/). By directly selecting a rectangular sampling region on the image using this software tool, a detection signal curve of the sampled region can be obtained directly. By adjusting parameters such as the height and/or width of the plotting panel under the "Plot Options" settings, a mapping relationship between the physical dimensions of the sampled area and the panel dimensions can be established. The numerical annotations or labels in the format "A×B" shown above the detection signal curves represent such mapping relationships. It is to be understood that these mapping relationships, or the numerical annotations themselves, have no intrinsic meaning. However, when the same image region is mapped to a relatively wide or short plotting panel, or alternatively to a relatively narrow or tall one, the corresponding detection signal curves would exhibit different shapes. For example, for the same sampling area, the signal curve plotted on a relatively wide panel will display smoother variations in signal intensity, whereas the curve plotted on a panel of the same height but smaller width will exhibit sharper or steeper changes in intensity.

The so-called fiducial template is a standard reference object or standard system for image registration, also known as a reference coordinate system, a fiducial, a reference fiducial, or a reference template. The image to be registered is mapped to that reference through a geometric transformation to achieve consistent spatial positioning and feature correspondence. A reference suitable as a fiducial template generally needs to meet requirements such as stability, unique correspondence, complete coverage, geometric consistency, and operability, etc. Specifically, for example, the reference does not change with changes in acquisition conditions or the status of a sample to be tested; includes sufficient features to ensure that fiducial points/registration points/feature points in the image to be registered uniquely correspond to corresponding points in the reference; should cover the complete surface region reflected by the image to be registered to avoid reference loss during alignment; can establish a clear mapping relationship with an actual acquisition system; includes identifiable feature points or geometric structures, suitable for algorithm detection and matching, etc.

The fiducial template may be designed, selected, or constructed on one's own. Relevant public literature discloses methods for constructing or obtaining a fiducial template. In the relevant embodiments of the present application, the surface region reflected by the image to be registered is a patterned surface. A design layout (layout template) that already exists during a design stage or before preparation of such a patterned surface, for example, an ideal geometric model such as a CAD layout coordinate system, is a basis for processing or preparing the surface. These design layouts are better fiducial templates. In some embodiments, the design layouts or fiducial templates are also referred to as priori references or priori templates.

The so-called coarse registration and fine registration are relative registration procedures, and division thereof depends mainly on a precision target of registration, a feature scale used, and a processing granularity of an algorithm. The coarse registration focuses on global, large-scale spatial alignment, aiming to quickly eliminate macroscopic geometric differences between images, such as overall translation, rotation, and scaling. The coarse registration usually utilizes sparse, highly significant features (such as the marker zones or fiducial points in the present application) to obtain a preliminary, pixel-level accurate transformation model at low computational costs. On that basis, the fine registration focuses on local, small-scale fine adjustments, aiming to correct local deformations and subtle deviations remaining after the coarse registration. The fine registration usually utilizes dense and more widely distributed features (such as the numerous bright spots in the marker zones in the present application) and pursues sub-pixel alignment precision by using more complex algorithms. The two constitute a progressive registration procedure from global to local, from coarse to fine. In some embodiments, the coarse registration is based on pixel-level operations, and relevant registration parameters are generally integer pixel coordinates or larger-scale discrete values, so as to quickly achieve overall alignment of the image and the fiducial template. The coarse registration can be considered to correspond to registration at an integer coordinate level. The fine registration performs further optimization on the basis of results of the coarse registration, and achieves sub-pixel precision using interpolation, fitting, and optimization algorithms. The fine registration may be considered to correspond to registration at a non-integer (sub-pixel) coordinate level.

Using a typical SBS sequencing system as an example, the sequencing system includes using a reversible terminator, a DNA polymerase, and a related solution system to achieve a plurality of cycles of controllable base extension, imaging, and excision. It can be understood that the target nucleic acid molecules attached to the reactive sites in the patterned surface region undergo polymerization reactions and reflect or are excited to emit light, such as fluorescence, which often appears as bright points or bright spots (spots) having signal intensities higher than the background at corresponding positions of the image acquired in the cycle. Therefore, according to information corresponding to specific chemical features (such as the target nucleic acid molecules that have undergone polymerization reactions) contained in these image sets, it is possible to determine whether polymerization reactions have occurred at designated positions on the target nucleic acid molecules. By combining this with the predefined correspondence between fluorescent luminescence signals and nucleotide types, the type of nucleotide/base that has undergone a biochemical reaction and has been introduced/ incorporated to the target nucleic acid molecule can be detected, thereby determining at least a portion of a sequence of the target nucleic acid molecule and obtaining so-called reads. It is understandable that the so-called read is actually a sequence inferred based on generation, acquisition, identification, and analysis of relevant signals.

For example, the nucleotide may be modified to carry or be capable of labeling with one or more fluorescent molecules, as well as to carry a cleavable inhibitory group (blocking group) that can prevent other nucleotides from polymerizing and incorporating to the next position of the target nucleic acid molecule (such modified nucleotides are also known as reversible terminators), and after each polymerization reaction or base extension reaction is completed, the fluorescent label is excited to emit light, and these luminescent signals are acquired to obtain an image of the target nucleic acid molecules undergoing a controlled base extension reaction in that surface region. Subsequently, the inhibitory group and fluorescent label are removed to proceed with the next polymerization reaction or the next cycle of polymerization reaction and signal acquisition and imaging. This polymerization-photography-cleavage is repeated multiple times or multiple cycles to obtain image set information related to nucleotides/bases introduced to the target nucleic acid molecules in each base extension reaction.

The repeated extension reaction and corresponding signal detection performed multiple rounds within the SBS of the above example are also referred to as "sequencing cycles" or cycles. One sequencing cycle may be defined as completion of determining the base or nucleotide type at one position on any nucleic acid template on the surface.

Still referring to FIG. 1, in some embodiments, step (S10) of performing coarse registration on the image on the basis of a fiducial template includes: determining positions of a plurality of fiducial points in the image on the basis of reference positions corresponding to the fiducial points in the fiducial template, establishing a fitting relationship on the basis of the positions of the plurality of fiducial points, and updating the positions of the fiducial points in the image on the basis of the fitting relationship,

In conjunction with the relevant explanations above, the fiducial template is a standard reference object or standard system for image registration, also known as a reference coordinate system, a fiducial, a reference fiducial, or a fiducial template, etc. The fiducial template includes a reference coordinate system and reflects the same surface region as the image. For example, the reference coordinate system may be a conventional Cartesian or polar coordinate system in mathematics, or a pixel coordinate system, a pixel coordinate system, or a design layout coordinate system in engineering practice. In some examples, a layout coordinate system is used as the fiducial template.

The surface region includes a plurality of adjacent marker zones and reaction zones, where the marker zone is provided with a plurality of discrete reactive sites regularly distributed in two or more non-parallel directions, and an intersection of the directions is located in the marker zone. The marker zone exhibits a specific intensity variation feature in a detection signal curve in the marker zone and adjacent reaction zones in each of the directions of the marker zone in which the regularly distributed reactive sites are provided. The fiducial point is located at the intersection of the directions of the marker zone and is located by using the intensity variation feature. At least a portion of the reactive sites appear as bright spots on the image, and the number of the bright spots is greater than the number of the fiducial points. For example, the surface region includes a number of, such as 8, 9, 10, or 11 marker zones, which are regularly distributed on the surface region. A pattern formed by the regular distribution is a vertical or non-vertical, communicating or non-communicating straight line or curve grid pattern as shown in FIG. 2 to FIG. 4. A marker zone includes, for example, only one intersection, and each intersection includes at most one fiducial point (also called reference point, registration point). A position of this feature or characteristic is selected as a fiducial point to facilitate establishment of a unique correspondence with the fiducial template and facilitate fast coarse registration. Each of the non-parallel directions of the marker zone includes, for example, 10, 15, 20, or 30 regularly distributed bright spots. The marker zone and the adjacent reaction zones in each of the directions show a specific intensity variation feature on the detection signal curve. This specific intensity variation feature is a presentation of a signal difference between the reaction zone and the marker zone on the detection signal curve. A specific form or shape thereof is related to signal features presented by the reaction zone and the marker zone respectively on the image. In some examples, the detection signal curve appears as, e.g., one W shape or W-like shape, or a broken line containing two or three W-shapes, etc.

More specifically, the plurality of marker zones form different regular distributions on the surface region. For example, FIG. 2a and FIG. 2b show "cross"-shaped marker zones, and the plurality of marker zones are regularly distributed along horizontal and vertical lines. Moreover, the marker zones are communicating as shown in FIG. 2a, or discrete as shown in FIG. 2b. The plurality of marker zones exemplified in FIG. 2a or FIG. 2b are regularly distributed in two perpendicular linear directions of the surface region, forming a grid or a grid-like pattern. In related embodiments, straight line or curve directions of regular distribution of the marker zones are also collectively referred to as baselines, which, for example, include horizontal lines and vertical lines in FIG. 2. In FIG. 2a, the plurality of marker zones are communicating, while in FIG. 2b, the plurality of marker zones are discrete. The marker zones in FIG. 2a or FIG. 2b are located at crossings or intersections of the horizontal and vertical lines, and are displayed as a "+" shape. The reaction zones are located in the surface region of non-marker zones, such as the discrete regular square surface regions divided by the communicating marker zones shown in FIG. 2a. In this case, the fiducial points in the marker zones are located at the intersection or crossing positions of the horizontal and vertical lines.

FIG. 3a, FIG. 3b, and FIG. 3c illustrate regular distribution of a plurality of marker zones on a surface in other embodiments of the present application, for example, a non-vertical grid distribution, a hexagonal distribution, a circular distribution, etc. Specifically, the bold black dots in FIG. 3 represent marker zones, and the plurality of marker zones form a plurality of groups of parallel lines with an angle of 60 degrees on the surface, and the three groups of lines are interwoven to form a honeycomb network pattern. In FIG. 3b or FIG. 3c, a plurality of marker zones are regularly distributed to form communicating or non-communicating hexagons, and surface regions of the non-marker zones are all reaction zones (FIG. 3c, the dotted line indicates that the marker zones are non-communicating), or the interior of each hexagonal honeycomb unit is a reaction zone (such as the gray filled region in FIG. 3b, in which only one discrete reaction zone is illustrated). The fiducial point is located at an intersection of a plurality of baselines.

FIG. 4 shows a curved regularly distributed pattern formed by marker zones on the surface in some embodiments. The surface pattern includes a set of curves arranged in a periodic pattern following a specific curve law (such as a sine wave, a parabola, etc.). The marker zone is located at an intersection of two or more regular curves, as shown in the rectangular box, and the marker zones are communicating or non-communicating. The surface region of non-marker zones is the reaction zones, or the reaction zones are located in the regions divided by those curves, and the fiducial points are located at the intersections of those regular curves.

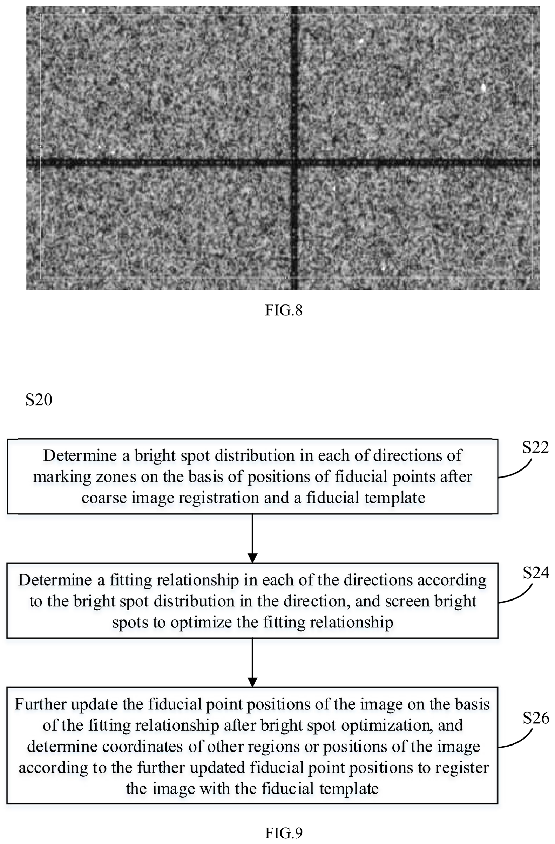

By utilizing the fiducial template and in conjunction with prior data such as a degree of deformation or offset of the surface region or the marker zones caused by a surface preparation process, sequencing-related biochemical reactions, and signal acquisition, a range or a most likely range of the fiducial point of each marker zone in the image is determined. The range includes an intersection of all directions of the marker zone and a portion of reaction zones adjacent to the intersection in all of the directions, such as the box marked "1" in FIG. 5B or the image range region shown in the box in FIG. 5A or FIG. 8. Specifically, referring to FIG. 5A or 5B, the marker zone is cross-shaped, and a row of bright spots are distributed in each of the two intersecting directions of the cross. The box marked 1 in the image represents a determined range in which a fiducial point may be located. Box 2 in box 1 is a marker zone region in the range. A signal curve corresponding to the box 1 range is shown in the upper left corner (also marked 1), and a signal curve segment in the box 2 range is also marked 2 in the curve graph. According to the curve, it can be seen that in this range (the box region marked 1 on the image) from one side to the other, for example, from a reaction zone on the left to a reaction zone on the right, a signal intensity per unit length region thereof (parallel to one direction/ extending direction of the marker zone) drops from one level to another, and then rises back to the original level. It can be understood that a drop to another level indicates entering a marker zone, and peaks (relatively high signal intensity) in a level after the drop reflect those unit length regions including bright spots in the marker zone. According to the specific intensity variation features of the curve, such as the W-shaped curve after the steep drop in FIG. 5A or 5B, the position of the fiducial point can be located.

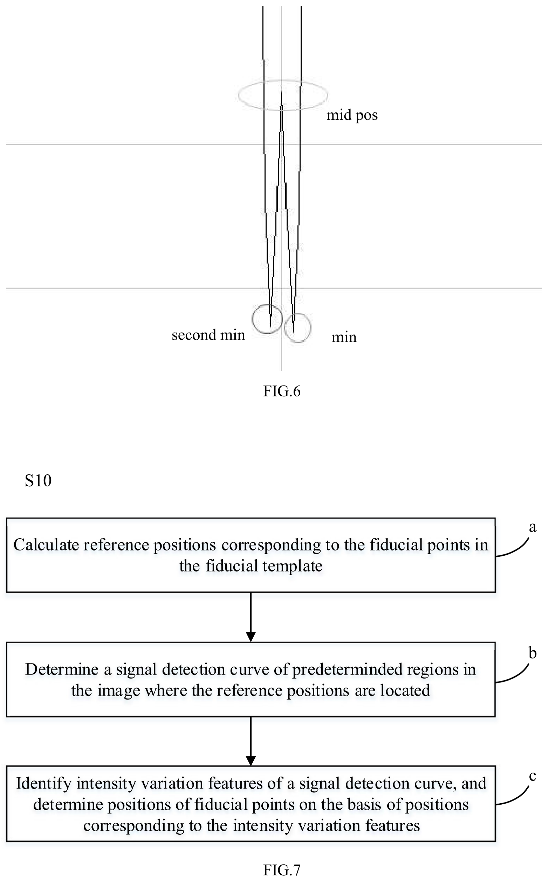

In the coarse registration step (S10), the positions of the plurality of fiducial points in the image need to be determined first. For example, a reference position of each corresponding fiducial point may be read from the fiducial template, such as coordinates of the intersection of the horizontal line and the vertical line of the marker zone in the fiducial template in FIG. 2, and combined with prior knowledge such as an estimated surface position offset or deformation degree caused by a surface preparation process, biochemical reaction and signal detection, etc., to determine the position or a region of the fiducial point in the image to be registered, and then an initial position of the fiducial point in the image is determined by identifying a specific intensity variation feature of the detection signal curve in the region. For example, the specific intensity variation feature shown on the detection signal curve presents a "W" or W-like shape as shown in FIG. 6. A horizontal axis of the detection signal curve represents distance, and a vertical axis represents signal intensity (intensity, such as a pixel value or grayscale value of a grayscale image). The formation of the "W" shape is due to the fact that the marker zones are adjacent to the reaction zones, and a signal intensity of a unit region in the marker zone is significantly weaker than a signal intensity of a reaction zone of the same size. For example, luminescent reactive sites in the marker zone are relatively low in quantity and sparsely distributed. For example, only one row or one column of reactive sites (at least a portion of which appears as bright spots) is provided in the middle of the marker zone in one direction. During imaging and signal acquisition, a detected signal intensity of a unit region of the marker zone is significantly weaker than that of the reaction zone. In this way, a signal curve of adjacent or neighboring regions of reaction zones and the marker zone will form a steep drop (corresponding to entering the marker zone from a reaction zone) to a rise (corresponding to those unit regions in the marker zone that contain bright spots) to a steep drop (corresponding to those unit regions in the marker zone that do not contain bright spots) to a steep rise (corresponding to entering an adjacent reaction zone from the marker zone), that is, a W or W-like shape. It can be understood that if two rows or two columns of reactive sites are provided in each direction in the marker zone, or the reactive sites are distributed in a broken line shape, a peak of the W-shape is relatively gentle, or a 1.5 or more W-shaped broken line shape with two peaks and three valleys appears, or the shape appears as an obvious concave shape.

The detection signal curve of the surface of a range containing a specific intensity variation feature such as a "W" or W-like shape may be drawn in the following manner, and the fiducial point position may be located according to the specific intensity variation feature: The range is, for example, a rectangular region. When a scan starts, a probe is located on one side of the range, such as a leftmost side of a left reaction zone in the range. During imaging and signal acquisition, a detected signal intensity of a unit region of a marker zone is significantly weaker than that of a reaction zone. In this way, a signal curve of adjacent or neighboring regions of reaction zones and the marker zone will form a steep drop (corresponding to entering the marker zone from a reaction zone) to a rise (corresponding to those unit regions in the marker zone that contain bright spots) to a steep drop (corresponding to those unit regions in the marker zone that do not contain bright spots) to a steep rise (corresponding to entering an adjacent reaction zone from the marker zone), that is, a W or W-like shape, as shown in FIG. 6. Therefore, the precision of coarse image registration can be improved on the basis of the intensity variation features shown on the detection signal curve. Specifically, "W"-shaped troughs of horizontal and vertical curves are identified, and extreme point positions of the troughs are extracted, such as a minimum value of the horizontal troughs, e.g., the "min" marked in FIG. 6. Additionally, the second minimum value is obtained, e.g., the "second min" marked in FIG. 6, and a middle position of the extreme points is calculated, that is, the "mid pos" shown in FIG. 6, to obtain the position of the fiducial point in the image. For example, minimum and second minimum values of integral values of 128 pixels in horizontal and vertical directions may be calculated respectively, and coordinate information corresponding thereto may be recorded, and then a middle position of the coordinates of the minimum and second minimum values may be calculated and the middle position may be determined as a position of a fiducial point.

After positions of a plurality of fiducial points in the image are obtained, a fitting relationship is established according to a regular distribution of marker zones or fiducial points, and then the positions of the fiducial points of the image are updated on the basis of the fitting relationship, thereby completing the coarse registration correction process and obtaining a coarse registration result. For example, a plurality of marker zones or fiducial points therein form a regular distribution on the surface, and the regular distribution has a plurality of directions, as shown in FIG. 2 to FIG. 4. After initial positions of all the fiducial points in the image are obtained on the basis of specific intensity features, fitting is performed according to position components of the fiducial points in all directions of the regular distribution (e.g., the regular distribution presents a mutually perpendicular grid, and the coordinate components of the fiducial points in two mutually perpendicular directions of the regular distribution may be expressed as x-coordinate components and y-coordinate components) to obtain a fitting relationship in each direction. For another example, the regular distribution formed by the plurality of marker zones or the fiducial points therein on the surface appears as a regular curve, such as a circle. After the positions of all the fiducial points in the image are obtained according to the specific intensity features, a circular fitting relationship is established according to the positions of the fiducial points. If the fiducial points are distributed linearly in a corresponding direction, a linear fitting relationship may be obtained by fitting. If the fiducial points are distributed as a curve in the corresponding direction, a curve fitting relationship may be obtained by fitting.

After the fitting relationship established on the basis of the positions of the fiducial points is obtained, by calculating a distance (such as vertical distance) from each fiducial point to a corresponding fitting relationship, for a fiducial point that deviates greatly from the fitting relationship (e.g., a distance exceeds 5 pixels), the position of the fiducial point is corrected on the basis of the fitting relationship to obtain an updated fiducial point position, thereby completing the coarse registration process. In this way, the positions of the fiducial points in the image are corrected through the fitting relationship established based on global features, and the image to be registered can be quickly aligned with the fiducial template.

After the coarse image registration is completed, performing step S20 of fine image registration can improve image registration precision, including performing fine registration of the image on the basis of the coarse registration result and the bright spots of the marker zones.

In some embodiments, a bright spot distribution in each of the directions of the marker zones is first determined, and then a fitting relationship in each of the directions of the marker zones is determined on the basis of the bright spot distribution, and then the fiducial point positions of the image are further updated on the basis of the fitting relationships; and coordinates of other regions or positions of the image are determined on the basis of the updated fiducial point positions to register the image with the fiducial template.

Specifically, on the basis of the fiducial point positions updated after the coarse registration, combined with a prior position relationship between the bright spot distribution in the marker zones and the fiducial points in the fiducial template, for example, the fiducial points in the fiducial template are located at intersections of regularly distributed bright spots in all of the directions of the marker zones, and bright spots in all of the directions of the marker zones are found in the image and positions thereof are recorded. The bright spot distribution in each direction of the marker zone is fitted to obtain the bright spot fitting relationship in each direction (for example, the marker zone includes two directions perpendicular to each other, and a fitting straight line relationship of bright spots in one direction, such as the horizontal or x direction, is y = 0.02x + 102.2). Intersections of the fitting relationships of bright spots in different directions (such as intersections of bright spot distribution fitting lines in horizontal and vertical directions) are calculated. The intersections are the updated fiducial point positions to achieve fine image registration. On the basis of the updated fiducial point positions and the prior positional relationship of the fiducial template, the coordinates of the reaction zones or other positions in the image can be quickly determined to achieve registration of the image with the fiducial template.

In an embodiment of the present application, the size of the marker zones does not exceed 10% of the surface region, which is conducive to obtaining high-throughput sequencing data. The size of the marker zones refers to an area proportion of all the marker zones in the surface region, including reactive site regions of the marker zones themselves and extended regions in all the directions (e.g., long strip-shaped distribution regions of the marker zones in the horizontal direction), but does not include background regions of the reaction zones.

In an embodiment of the present application, at least a part of the reaction zones are discrete, and the marker zone exists between two adjacent reaction zones. In this way, independent positioning of the reaction zones can be achieved through the marker zones, avoiding cross interference of reaction zone signals. Discretion of reaction zones means that there is a physical or signal separation between the reaction zones, and adjacent reaction zones are not directly connected; a marker zone is located between the adjacent reaction zones, e.g., forming an alternating distribution structure of "reaction zone-marker zone-reaction zone". For example, the reaction zone is a circular region with a diameter of d1, and a distance between centers of the adjacent reaction zones is d2; the marker zone is a long strip-shaped region located on a center connecting line of the adjacent reaction zones, that is, the adjacent reaction zones are separated by the marker zone. After the fiducial points in the marker zones are positioned, coordinates of the reaction zones on both sides can be directly determined, avoiding signal overlap (such as fluorescence signal crosstalk) caused by adjacent reaction zones, ensuring that the signal of each reaction zone can be extracted independently, and improving the accuracy of subsequent base recognition.

In another embodiment of the present application, as shown in FIG. 2b or FIG. 3c, at least a part of the marker zones in FIG. 2b or FIG. 3c are discrete, and the reaction zone exists between two adjacent marker zones. This can be applied to scenarios where the area of the reaction zones is large, and partitioned positioning of the reaction zones can be achieved through discrete marker zones. Discretion of marker zones means that there is a gap between marker zones, and adjacent marker zones are not directly connected, and a reaction zone is located between the adjacent marker zones. For example, a "marker zone-reaction zone-marker zone" distribution structure may be formed, and each reaction zone corresponds to a plurality of marker zones. Discrete marker zones can be used to locate large-area reaction zones, avoiding local registration deviations caused by excessively large reaction zones (such as deviations between edges and center of the reaction zone). Furthermore, coordinated positioning of a plurality of marker zones improves reliability of reaction zone coordinates. Even if positioning of a certain marker zone is deviated, the deviation may still be corrected by using the other three marker zones, significantly improving the robustness of registration.

In an embodiment of the present application, the reaction zone is also provided with a plurality of regularly distributed discrete reactive sites, and reactive sites of at least a portion of the reaction zones appear as bright spots on the image.

In a related embodiment, the reactive sites in the reaction zones and the marker zones are each independently present as depressions and are regularly distributed. The depression structure may be recesses formed on a surface of a sequencing chip through photolithography and etching processes, including micropores (e.g., 1-10 µm in diameter) or nanopores (e.g., 10-100 nm in diameter). The nucleic acid molecule to be tested is attached to the depression surface to facilitate microscopic optical imaging, identification, and recognition. In this embodiment, the respective depression arrays of the reaction zones and the marker zones form different pattern features or signal differences, which is beneficial for image registration.

In an embodiment of the present application, a distribution of the reactive sites in the reaction zone is denser than a distribution of the reactive sites in the marker zone. In some examples, the size of a single reactive site in the reaction zone is smaller than the size of a single reactive site in the marker zone, but the density of reactive sites in the reaction zone is greater. In this way, by distinguishing signal features of the marker zone and the reaction zone through density and/or size, the marker zone and the reaction zone can be quickly identified, avoiding confusion between the two during image registration. Furthermore, the high-density and/or small-size site design in the reaction zones improves a signal intensity per unit area thereof, facilitating subsequent base recognition. The low-density and/or large-size site design in the marker zones ensures that fiducial points at intersections of directions are clear, to avoid excessive obscuration of intersection features by the sites, achieving coordinated optimization of function and positioning.

The following describes in detail the coarse registration process in the embodiments of the present application. FIG. 7 shows a procedure of coarse registration in some embodiments of the present application. Specifically, (S10) coarsely registering the image on the basis of the fiducial template includes the following steps: (a) calculating reference positions corresponding to the fiducial points in the fiducial template; (b) determining a detection signal curve of predetermined regions in the image where the reference positions are located; and (c) identifying the intensity variation features of the detection signal curve and determining the positions of the fiducial points on the basis of positions of the intensity variation features.

From the reference coordinate system of the fiducial template, coordinates of the intersections of the directions of the marker zones are read as the reference positions of the fiducial points. For example, if coordinates of an intersection of horizontal and vertical directions of a certain marker zone in the template are (200, 200), then a reference position of a fiducial point is (200, 200). Then, the detection signal curve of the predetermined regions where the reference positions in the image are located are determined, where the so-called predetermined region is also referred to as a range or region where a fiducial point is located in some embodiments, including an intersection of all directions of a marker zone and a portion of reaction zones adjacent to the directions, such as the box region of marked 1 in FIG. 5B or the box region in FIG. 5A or FIG. 8. For example, in the image to be registered, a region centered at a reference position and including an intersection of a marker zone and adjacent reaction zones (such as 128 × 128 pixels) is used for focusing signal detection to reduce background noise interference. A signal intensity per unit length of the predetermined region is acquired from one side to the other along a certain direction (such as a horizontal direction) of the marker zone, and a detection signal curve of the predetermined region is formed with "distance-signal intensity" as a coordinate axis to reflect signal change features in the predetermined region.

The coarse registration process is mainly divided into three steps, and an operated object and a processing method of each step are clearly defined. This facilitates engineering development. For example, corresponding processing processes may be performed by using different processing units, and interference of background noise is reduced by focusing detection on the predetermined regions, making the intensity variation features easier to identify, thereby improving the precision of fiducial point positioning.

In an embodiment of the present application, the plurality of marker zones are regularly distributed along two or two non-parallel straight lines in the surface region, and the corresponding coarse registration process shown in FIG. 1 may further include the following steps:
(d1) Establishing a fitting relationship in a corresponding direction by using position components of the fiducial points in each of the directions;
(e1) Performing binary classification on the fiducial points according to a preset condition, and updating the fitting relationship in the corresponding direction on the basis of position components of fiducial points in a designated category after the binary classification, where the preset condition is related to a distance between the fiducial point and the fitting relationship; and
(f1) Correcting position components of fiducial points in another category on the basis of the updated fitting relationship.

Referring to FIG. 2, FIG. 8 may also illustrate corresponding predetermined region in the fiducial template that includes a horizontal baseline and a vertical baseline (alternatively, the predetermined region in which a fiducial point in an image may be located). In FIG. 8, each black cross-shaped area represents a segment of a baseline in the corresponding direction. As shown in FIGS. 2A and 2B, a plurality of marker zones are regularly distributed over the surface area along mutually perpendicular horizontal (X-axis) and vertical (Y-axis) directions, forming a regular grid pattern. This pattern appears as horizontal and vertical baselines in the image. For a corresponding fiducial point P in the fiducial template, its coordinates can be represented as (Xp, Yp). Its position component along one horizontal direction corresponds to its Y-coordinate (Yp) (wherein all corresponding fiducial points located on the same horizontal baseline have the same Y-coordinate values), and its positional component along one vertical direction corresponds to its X-coordinate (Xp) (wherein all corresponding fiducial points located on the same vertical baseline have equal X-coordinate values).

In the corresponding image, based on a predetermined region as schematically shown in FIG. 8, the intersection (or crossing point) of the horizontal and vertical baselines can be determined, thereby determining the position of the fiducial point or the location where the fiducial point resides. Similarly, from a global perspective of the entire image, according to the distribution of the marker zones, all fiducial points can be categorized into two spatial sets: a set in each horizontal direction comprising fiducial points having the same or similar Y-coordinate values, and a set in each vertical direction comprising fiducial points having the same or similar X-coordinate values. Subsequently, a fitting such as linear fitting may be performed on the Y-coordinate values of the reference points in the horizontal-direction set to obtain a fitted straight line in the corresponding direction; the same applies to the other direction.

A vertical distance from each fiducial point to the fitting line is calculated, including calculating a distance from the Y coordinate of the fiducial point to the horizontal fitting line, and calculating a distance from the X coordinate thereof to the vertical fitting line. A preset distance threshold D1 is set, and fiducial points whose maximum value (or average value) of the two distances is less than or equal to D1 are classified into a designated category (such as an inlier set); fiducial points with a distance greater than D1 are classified into another category (an outlier set, i.e., abnormal points). Using only the fiducial points in the designated category (such as the inlier set), step (d1) is re-performed, that is, X coordinates and Y coordinates of those inliers are used to fit new, more accurate vertical fitting lines and horizontal fitting lines, respectively. Then, for the fiducial points classified into the other category (such as the outlier set) in (e1), the positions thereof need to be corrected. For an abnormal fiducial point, the fiducial point is projected onto the updated fitting line. That is, an X coordinate thereof is corrected to a value on the vertical fitting line, and a Y coordinate thereof is corrected to a value on the horizontal fitting line to obtain corrected new coordinates.

In this embodiment, for scenarios where marker zones are distributed in a straight line, a fiducial point offset caused by local deformation of a chip can be eliminated through fitting and correction of the position components, such that fiducial points in the same direction are more closely aligned with a straight line distribution. The binary classification screening can eliminate abnormal fiducial points (such as deviation points caused by noise) to prevent the abnormal fiducial points from affecting fitting relationships and improve the reliability of coarse registration.

Further, in an embodiment of the present application, the preset condition includes a plurality of distance thresholds that gradually converge from large to small, for example, the plurality of distance thresholds include a maximum distance threshold D1 and a second-greatest distance threshold D2. Accordingly, (e1) performing binary classification on the fiducial points according to a preset condition, and updating the fitting relationship in the corresponding direction on the basis of position components of fiducial points in a designated category after the binary classification in the above embodiments may include the following steps: (e11) performing binary classification on the fiducial points according to the distance threshold D1, including classifying fiducial points whose distance from the fitting relationship is less than or equal to the distance threshold D1 into the designated category, and classifying fiducial points whose distance from the fitting relationship is greater than the distance threshold D1 into another category other than the designated category;
(e12) Updating the fitting relationship in the corresponding direction by using position components of the fiducial points in the designated category after (e11) in each of the directions;
(e13) Performing binary classification on the fiducial points in the designated category after (e11) according to the distance threshold D2, including classifying fiducial points whose distance from the fitting relationship after (e12) is less than or equal to the distance threshold D2 into the designated category, and classifying fiducial points whose distance from the fitting relationship after (e12) is greater than the distance threshold D2 into another category; and
(e14) Updating the fitting relationship in the corresponding direction by using position components of the fiducial points in the designated category after (e13) in each of the directions.

In this embodiment, the predetermined condition is a plurality of distance thresholds (such as D1 and D2) that gradually converge from large to small. Through a plurality of rounds of binary classification and fitting update, the precision of the fiducial point fitting relationships is further improved, which is suitable for sequencing scenarios with high requirements for registration precision. The convergent distance thresholds refer to distance thresholds used in a plurality of rounds of screening being gradually reduced (e.g., D1 = 5 pixels, D2 = 3 pixels, and D3 = 1 pixel), such that selected fiducial points are increasingly closer to an ideal distribution, and the fitting relationship gradually converges to an optimal one. For example, binary classification is first performed according to D1 = 5 pixels. For example, vertical distances of 20 horizontal fiducial points to an initial fitting relationship (e.g., y = 0.05x + 187) are calculated. 19 fiducial points with a distance less than or equivalent to 5 pixels are classified into the designated category, and fiducial points with a distance equivalent to 6 pixels are classified into a non-designated category. Then, on the basis of the y coordinates of the 19 fiducial points in the designated category, refitting is performed to obtain y = 0.049x + 187.1. Vertical distances of the 19 fiducial points in the designated category to the updated fitting relationship (e.g., y = 0.049x + 187.1) are then calculated, in which 17 fiducial points with a distance less than or equal to 3 pixels are classified into a new designated category, and 2 fiducial points with distances equal to 3.5 pixels and 4 pixels are classified into a non-designated category. On the basis of y coordinates of the 17 fiducial points in the designated category, refitting is performed to obtain y = 0.048x + 187.2 (e.g., a final fitting relationship). If higher accuracy is required, D3 may be set to 1 pixel and the above procedure is repeated to select 15 fiducial points with a distance less than or equal to 1 pixel. For example, a fitting result is y = 0.0478x + 187.22, so as to further improve the fitting precision. It should be noted that the numerical values and formulas of the various distance thresholds and fitting relationships in this example are intended to better illustrate the fitting update process, and specific values may be determined according to actual application scenarios.

In this embodiment, the convergent distance thresholds are used for a plurality of rounds of screening and fitting such that the fitting relationship gradually approaches an actual distribution of the fiducial points. The reduction of the threshold in each round ensures asymptotic nature of the screening, avoids elimination of a large number of valid fiducial points due to use of a small threshold at one time, and balances the fitting precision and the number of fiducial points.

In one embodiment of the present application, the plurality of marker zones are distributed in a regular curve direction in the surface region, and a corresponding coarse registration process may include the following steps: (d2) establishing a corresponding curve fitting relationship by using the positions of the fiducial points;
(e2) Performing binary classification on the fiducial points according to a preset condition, and updating the corresponding curve fitting relationship on the basis of positions of fiducial points in a designated category after the binary classification, where the preset condition is related to a distance between the fiducial point and the curve fitting relationship; and
(f2) Correcting positions of fiducial points in another category on the basis of the updated curve fitting relationship.

The distribution of the marker zones in the surface region in the regular curve direction may mean that the marker zones are distributed along a circle, an ellipse, a sine curve, a parabola, or other regular curves (as shown in FIG. 4) in the surface region, and the positions of the fiducial points conform to a curve equation. For example, when the circular distribution conforms to a circular distribution, a circle equation corresponding thereto may be: (x - a)² + (y - b)² - r², where (a, b) is the center of the circle and r is a radius. Then, the curve equation obtained by fitting the fiducial point positions is used to describe curve distribution features of the marker zones.

For example, it is assumed that the marker zones in the image are distributed in a circle direction, and there are 30 fiducial points with coordinates of (150, 200), (155, 195), (160, 190), ... that conform to a circular trajectory. A circular curve equation is obtained by fitting the coordinates of these 30 fiducial points using a nonlinear fitting algorithm: (x - 150)² + (y - 200)² = 100² (center at (150, 200), radius of 100 pixels), which is a curve fitting relationship. For example, the preset condition is set as a distance from a fiducial point to the circular curve being less than or equal to 4 pixels. A distance from each fiducial point to the circular curve is calculated, fiducial points in the designated category (distance less than or equal to 4 pixels) are collected, and refitting is performed to obtain an updated circular curve equation: For example, (x - 150.2)² + (y - 199.8)² = 99.9². For the fiducial points in the non-designated category, projection points thereof on the circle are calculated on the basis of the updated circular curve equation, and the projection points are used as corrected fiducial point positions. In an embodiment of the present application, for the scenario where the marker zones are distributed in a curve, optimization of the fiducial points in a non-linear distribution is achieved through the curve fitting relationship, breaking through limitations of traditional linear fittings, applicable to special chip structures such as circular and wavy shapes. The curve fitting and correction can eliminate fiducial point offsets on the curve trajectory (such as local deviations caused by chip deformations), such that the fiducial point distribution is more consistent with the preset curve.

Furthermore, the preset condition includes a plurality of distance thresholds that converge gradually from large to small, and the plurality of distance thresholds include a maximum distance threshold D1 and a second-greatest distance threshold D2. (e2) comprises:
(e21) Performing binary classification on the fiducial points according to the distance threshold D1, including classifying fiducial points whose distance from the curve fitting relationship is less than or equal to the distance threshold D1 into the designated category, and classifying fiducial points whose distance from the curve fitting relationship is greater than the distance threshold D1 into another category other than the designated category;
(e22) Updating the curve fitting relationship according to positions of the fiducial points in the designated category after (e21);
(e23) Performing binary classification on the fiducial points in the designated category after (e21) according to the distance threshold D2, including classifying fiducial points whose distance from the curve fitting relationship after (e22) is less than or equal to the distance threshold D2 into the designated category, and classifying fiducial points whose distance from the curve fitting relationship after (e22) is greater than the distance threshold D2 into another category; and
(e24) Updating the curve fitting relationship according to positions of the fiducial points in the designated category after (e23).

In this embodiment, a plurality of rounds of screening and fitting update using the convergent distance thresholds provide a high-precision reference basis for subsequent fiducial point correction. Moreover, the use of the plurality of rounds of screening avoids the problem of insufficient effective fiducial points caused by using a small threshold at one time, and balances the fitting precision and the number of fiducial points. It should be noted that the processing process of a plurality of rounds of screening and fitting update for curve features is similar to the screening and updating process for the straight line fitting relationship in the aforementioned embodiments, and will not be described in detail herein.

Accordingly, in an embodiment of the present application, the plurality of marker zones are regularly distributed in the surface region in two or more non-parallel directions, where at least one direction is a straight line direction, and at least another direction is a regular curve direction. For a processing process in the straight line direction, reference may be made to the description of the relevant steps d1 to f1 in the above embodiment description. For a processing process in the regular curve direction, reference may be made to the description of the relevant steps d2 to f2 in the above embodiment description. Details will not be provided herein.

The process of fine registration of the image is described below.

Referring to FIG. 9, which shows a schematic flowchart of fine registration according to an embodiment of the present application. The fine image registration process, i.e., the process of performing fine registration on the image on the basis of the coarse registration result and the bright spots (S20) shown in FIG. 1, comprises the following steps: S22. Determine a bright spot distribution in each of the directions of the marker zones on the basis of the positions of the fiducial points after the coarse image registration and the fiducial template. The process includes identifying bright spots in a plurality of regions in each of the directions.

S24. Determine a fitting relationship in each of the directions according to the bright spot distribution in the direction, and screen the bright spots to optimize the fitting relationship.

S26. Further update the fiducial point positions of the image on the basis of the fitting relationship after bright spot optimization, and determine coordinates of other regions or positions of the image according to the further updated fiducial point positions to register the image with the fiducial template.

The bright spot distribution in each of the directions of the marker zone refers to a position set of effective bright spots in non-parallel directions of the marker zone (such as horizontal, vertical, sinusoidal, or circular curve directions). For example, there are 10 bright spots distributed along a straight line in a horizontal direction and 8 bright spots distributed along a straight line in a vertical direction. The distribution characteristics thereof reflect actual position deviations of the marker zone. By screening out abnormal bright spots (such as noise points and pseudo bright spots with weak signals), the bright spot fitting relationship (such as a straight line or curve equation) is updated to ensure that the fitting relationship can accurately describe an actual distribution of bright spots. On the basis of the updated fiducial point positions, coordinates of the reaction zones and other marker zones in the image are determined so that the coordinate system of the image and the fiducial template are fully aligned, providing a precise coordinate reference for subsequent base recognition.

For example, on the basis of the fiducial point positions after the coarse registration and the fiducial template, the directions of the marker zone (such as horizontal and vertical directions) and an estimated bright spot region in each direction are determined: For example, if a horizontal length L of the marker zone is known to be approximately 50 pixels, to limit search to the marker zone, the fiducial point may be set as a center and the bright spot region can be delineated within a range of ±(L/2 - d) pixels along a direction axis (where d is a safety margin, such as 5 pixels, to avoid touching an edge of the marker zone). On that basis, three search regions of size (2d) × (2d) (e.g., 10 × 10 pixels) may be defined horizontally on the left, center, and right sides of the fiducial point, respectively, to accurately cover an expected bright spot position in that direction within the marker zone, which correspond to three estimated positions of horizontal bright spots, "left, center, and right", respectively. In the vertical direction, with the fiducial point as the center, three bright spot regions (the size of each region is 10 × 10 pixels) are delineated along a y-axis within a range of ±20 pixels, corresponding to three estimated positions of vertical bright spots, "top, middle, and bottom", respectively. Valid bright spots are identified within each bright spot region. For example, the bright spots are screened by ensuring that a central pixel signal value is greater than eight surrounding neighboring pixels, and bright spot distributions (position set) in the horizontal and vertical directions are obtained, providing a data basis for subsequent fitting. Then, according to the fitting relationships based on the preliminary bright spot fitting obtained by optimizing the filtered bright spots, updated fitting relationships are obtained, and then the fiducial point positions of the image are updated on the basis of the updated fitting relationships, and the coordinates of other regions or positions of the image are determined on the basis of the further updated fiducial point positions to register the image with the fiducial template. In this embodiment, from bright spot recognition to fitting optimization, and then to fiducial point update and global registration, the embodiment is applicable to fine registration scenarios of all marking region distribution types (linear, curved, and composite distributions), further improving the precision of image registration.

In an embodiment of the present application, the processing process of determining a bright spot distribution in each of the directions of the marker zones on the basis of the positions of the fiducial points after the coarse image registration and the fiducial template includes: determining, by using position components of the fiducial points in the direction after (S10) and a relative positional relationship between the fiducial points and the bright spots included in the reference coordinate system, a pixel range k1 × k2 where a bright spot is possibly located in each of a plurality of regions in each of the directions, where k1 and k2 are each independently an odd number greater than 1; and identifying, according to a difference in pixel size between a central pixel and surrounding pixels, a bright spot in the pixel range k1 × k2 where the bright spot is possibly located.

The position components of the fiducial points in the direction after rough calibration refers to coordinate projections of the fiducial points in a certain direction of the marker zones. For example, a position component in a horizontal direction of the marker zone is a y coordinate of the fiducial point, and a position component in a vertical direction is an x coordinate of the fiducial point, which are used to determine approximate height or horizontal position of a bright spot in that direction. The relative positional relationship between the fiducial points and the bright spots included in the reference system may represent coordinate offsets between the bright spots and the fiducial points in the fiducial template. For example, if a bright spot is located 10 pixels to the right of the fiducial point in the horizontal direction and the two have the same y coordinate, the coordinate offset may be stored in the form of (Δx, Δy), which is a core basis for delineating the bright spot pixel range. The pixel range of k1 × k2 where the spot is possibly located refers to a search region centered on an estimated position of the bright spot. k1 and k2 are odd numbers greater than 1, ensuring that the search range is symmetrical around the estimated position and covers possible offsets of the bright spot (such as coarse alignment deviation and signal drift), and avoiding an overly large range that reduces search efficiency.

For example, the pixel range where the spot is possibly located is set to 5 × 5 pixels, and the bright spot is determined on the basis of the pixel size difference between the central pixel and the surrounding pixels. Specifically, when a grayscale value of the central pixel is greater than grayscale values of the surrounding pixels, the central pixel may be regarded as the bright spot of the pixel range. This can effectively distinguish bright spots from background noise and improve the accuracy of bright spot recognition.

During the coarse registration process in the embodiments of the present application, the fiducial points may be classified into two categories according to the preset condition, and then the fitting relationship in the corresponding direction may be updated on the basis of the position components of the fiducial points in the designated category after the binary classification. When the preset condition is a first preset condition, determining the fitting relationship in each of the directions according to the bright spot distribution in the direction during the fine registration process in the embodiment of the present application comprises: screening the bright spots according to a second preset condition and updating the fitting relationship in the direction on the basis of bright spots retained after the screening, where the second preset condition is related to distances from the bright spots to the fitting relationship. The second preset condition is a condition for screening bright spots during the fine image registration process, and may be, for example, a distance between a bright spot and a current fitting relationship being not greater than a preset distance threshold. Then, on the basis of effective bright spots retained after the screening, a more accurate fitting relationship (such as a straight line or curve equation) is refitted, which is a basis for subsequent update of the fiducial point positions.

Further, the second preset condition includes a plurality of distance thresholds that gradually converge from large to small, and the plurality of distance thresholds include a maximum distance threshold D21 and a second-greatest distance threshold D22. The process of determining the fitting relationship in each of the directions according to the bright spot distribution in the direction in the fine registration process and screening the bright spots to optimize the fitting relationship includes the following steps: (S241) screening the bright spots according to the distance threshold D21, comprising retaining bright spots whose distance from the fitting relationship is less than or equal to the distance threshold D21, and optionally discarding bright spots whose distance from the fitting relationship is greater than the distance threshold D21; (S243) updating the fitting relationship by using bright spots retained after (S241);
(S245) Screening the bright spots retained after (S241) according to the distance threshold D22, including retaining bright spots whose distance from the fitting relationship after (S243) is less than or equal to the distance threshold D22, and optionally discarding bright spots whose distance from the fitting relationship after (S243) is greater than the distance threshold D22; and
(S247) Updating the fitting relationship by using bright spots retained after (S245).

The distance thresholds used in the plurality of rounds of screening are gradually reduced (e.g., D21 = 2 pixels, and D22 = 1 pixel). Bright spots retained after each round of screening are closer to an ideal distribution, and the accuracy of the fitting relationship is gradually improved. After each round of screening, refitting is performed on the basis of the retained effective bright spots so that the fitting relationship is optimized as the thresholds converge, thus avoiding the problem of insufficient effective bright spots caused by using a small threshold at one time. For example, it is assumed that 10 bright spots are initially identified in a horizontal direction, an initial fitting relationship is y = 0.005x + 196.1, and the preset convergent thresholds are D21 = 2 pixels and D22 = 1 pixel. Vertical distances between those 10 bright spots and the initial fitting relationship are then calculated. On the basis of the calculation results, 9 bright spots having a distance less than or equal to 2 pixels are retained and 1 bright spot having a distance greater than 2 pixels is discarded. On the basis of y-coordinates of the 9 retained bright spots, refitting is performed to obtain an updated fitting relationship: y = 0.0049x + 196.11. Vertical distances from the 9 retained bright spots to the updated fitting relationship are then calculated. On the basis of the results, 8 bright spots having distances less than or equal to 1 pixel are retained, and 1 bright spot having a distance greater than 1 pixel is discarded. On the basis of y-coordinates of the 8 retained bright spots, refitting is performed to obtain a fitting relationship, and distances from these 8 bright spots to the fitting relationship are continued to be calculated. If all of the distances meet the distance threshold D23, the processing flow of updating the fitting relationship may be stopped. If there is a bright spot that does not meet the distance threshold, the bright spot may be discarded and the process of updating the fitting relationship may be continued.

In this embodiment, the plurality of rounds of screening using the convergent thresholds can gradually eliminate abnormal bright spots of varying degrees, thus avoiding mistaken elimination of a large number of valid bright spots due to use of a small threshold at one time. The precision of the final fitting relationship is significantly improved, providing an extremely high-precision reference for subsequent fiducial point updates, ensuring that the alignment precision of the image and the fiducial template meets signal extraction requirements of single-molecule sequencing.

In the processing processes of the coarse and fine image registration in the present application, in order to improve registration efficiency, different tasks may be performed in parallel by a plurality of processing units. This may be suitable for massive image processing of high-throughput sequencing, shorten image registration time, and meet real-time requirements for a sequencing process. Hardware with multi-core processing units or multi-threading capabilities, such as a graphics processor (GPU) or a multi-core central processing unit (CPU), may be used to assign different registration tasks to different processing units and execute the registration tasks simultaneously, thereby reducing total processing time.

For example, the process of determining the positions of the plurality of fiducial points in the image during the coarse registration process is performed by using a plurality of parallel processing units. Specifically, if the image includes 200 fiducial points, a predetermined region of 128 × 128 pixels needs to be processed for each fiducial point. Tasks of processing the predetermined regions of the 200 fiducial points are assigned to 200 thread blocks (each thread block processes 1 fiducial point). Each thread block independently reads data of a predetermined region, extracts a detection signal curve, identifies an intensity variation feature, and determines a fiducial point position without waiting for other thread blocks. If traditional serial processing takes 100 ms (0.5ms per fiducial point), the parallel processing only takes 0.6 ms (including data read and write delays), bringing an efficiency improvement of approximately 167 times.

For example, the update processing process of each fitting relationship in each direction in the coarse registration process may be performing by using a plurality of parallel processing units. If the marker zones in the image are distributed along three non-parallel directions (horizontal, vertical, and 45° tilt), a fitting relationship needs to be updated in each direction. Tasks of fitting update in the three directions are assigned to three independent thread groups (each group contains 32 threads). Each thread group independently reads fiducial point data in a corresponding direction, calculates a distance, screening fiducial points, and updates a fitting relationship. For example, a horizontal thread group processes y-coordinate fitting of 200 fiducial points, and a vertical thread group processes x-coordinate fitting, without interfering with each other. If serial processing takes 30 ms, parallel processing takes 10 ms, improving efficiency by 3 times.

For example, the optimization process of each fitting relationship in the image fine registration process is performed by using a plurality of parallel processing units. For example, in the fine registration, the marker zones are distributed along two directions (horizontal and vertical), and a procedure of filtering bright spots and updating a corresponding fitting relationship on the basis of the filtered bright spots needs to be performed in each direction. The fitting optimization tasks in the two directions are assigned to two thread blocks. For example, a horizontal thread block processes screening and fitting of 8 bright spots, and a vertical thread block processes screening and fitting of 7 bright spots, and outputs updated fitting relationships at the same time.

For example, the process of determining the coordinates of other zones/areas or positions of the image according to the further updated fiducial point positions in (S26) during the image fine registration process is performed by using a plurality of parallel processing units. For example, if the image includes 1000 reaction zones, their coordinates can be calculated on the basis of the updated fiducial point positions. Specifically, the task of calculating the coordinates for these 1000 reaction zones can be distributed across 1000 thread blocks, with each block computing the position of one reaction zone. Each thread block may independently read the prior positional relationship between the reaction zones and the fiducial points, then substitute fiducial point coordinates to compute reaction zone coordinates. For another example, each reaction zone may contain 1000 clusters. Within a thread block, each thread processes one cluster, to identify the base type introduced/incorporated into that cluster during that sequencing cycle.

In the embodiments of the present application, tasks that can be processed in parallel may be distributed to a plurality of parallel processing units, thereby avoiding waste of hardware resources and ensuring load balancing of the processing units. Furthermore, the parallel processing of the processing units does not affect registration accuracy, and improves registration efficiency.

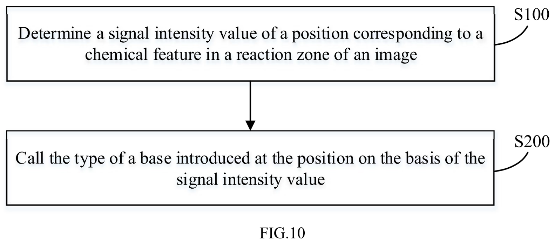

An embodiment of the present application further provides a method for performing detection on an image to recognize a base. The image is derived from a detection system that implements sequencing based on patterned surface microscopic imaging. A surface region reflected by the image includes a plurality of adjacent marker zones and reaction zones. Referring to FIG. 10, the method includes (S100) determining a signal intensity value at a position corresponding to a chemical feature in a reaction zone of an image, the image being an image registered by the method or system for registering an image in any of the above embodiments of the present application; and (S200) recognizing a type of a base introduced at the position on the basis of the signal intensity value.

The position of the corresponding chemical feature in the reaction zone refers to a position of a reactive site in the reaction zone where DNA polymerization occurs or may occur. For example, after alignment with the fiducial template, coordinates of each reaction site may be directly determined using interpolation, and then an intensity of the coordinate position is read. The type of the base to be incorporated or extended in a current round of reaction is determined on the basis of a probability that the intensity originates from that base. For example, a base channel with the greatest contribution to the signal intensity is determined to be the target base to obtain a base recognition result.

Further, in a related embodiment, the signal intensity value is a corrected signal intensity value. Correcting the signal intensity value includes performing correction by using at least one of the following methods i) to iii): i) performing bleeding correction on the signal intensity value; ii) performing crosstalk correction on the signal intensity value; and iii) performing phase correction on the signal intensity value.

Various corrections can utilize a GPU block multi-threaded processing mode. For example, the bleeding correction coefficient is used to perform bleeding correction on a current bright spot signal intensity to improve the accuracy of the bright spot signal intensity.

The intensity or intensity value, sometimes also referred to as brightness in the relevant embodiments of the present application, may be represented by using a pixel value/grayscale value, sub-pixel value or sub-pixel value of a position of the nucleic acid molecule on the image. For example, a feature of a nucleic acid molecule at a certain position on the image occupies one or more pixels or a plurality of sub-pixels. Intensity information of the nucleic acid molecule at that position on the image may be represented by an intensity value of any pixel or sub-pixel position where the feature is located. A center or centroid of the feature may also be determined, and a pixel value or sub-pixel value at the position where the center or centroid is located may be used to represent the intensity information of the nucleic acid molecule at that position on the image. The intensity information of the nucleic acid molecule at one or more positions on the image may be an original signal intensity value on the image, or may be a processed signal intensity value, such as an intensity value after background removal and/or correction for at least one of chromatic aberration, cross-talk and phase, or may be an intensity value after standardization or normalization, etc. Crosstalk correction, phase correction (phasing or prephasing correction), etc. may be performed by published methods such as those disclosed in EP3077943B1 and CN113012757B.

In some specific examples, an inter-channel interference coefficient is calibrated by performing acquisition and analysis on an original signal of a sequencing image in advance. For example, an interference coefficient between channel A and channel T may be expressed *as a_{AT}.* Correspondingly, interference coefficients *a_{AC}, a_{AG}, a_{CA}, a_{CG}, a_{CT}, a_{GA}, a_{GC}, a_{GT}, a_{TA}, a_{TC},* and *a_{TG}* between other channels may be obtained. Using a GPU block processing mode, one GPU processing thread can handle 4-channel correction of a bright spot, for example: A_{after} correction = A_{before} correction - C_{before} correction × *a_{CA}* - G_{before correction} × *a_{GA}* - T_{before correction} × *a_{TA}.* A correction process for other bright spots is similar. Therefore, crosstalk correction may be completed in parallel for four channels of each bright spot, which improves the efficiency of bright spot signal intensity correction.

During a phase correction process, correction may be performed according to residual ratio coefficients between a current sequencing cycle and previous and next sequencing cycles. For example, the residual ratio coefficients prephasing_{lastcyc}, phasing_{nextcyc}, prephasing_{currcyc}, and phasing_{currcyc} between the current sequencing cycle and the previous and next sequencing cycles may be calculated in real time for correction. For example, the corrected signal intensity is expressed as A_{currcyc after correction}: A_{currcyc} after correction - A_{currcyc} before correction + A_{currcyc} before correction × phasing_{currcyc} - A_{currcyc} before correction × prephasing_{lastcyc} + A_{currcyc} before correction × prephasing_{currcyc} - A_{currcyc} before correction × phasing_{nextcyc}.

Specifically, a GPU may be used to calculate a histogram of a ratio coefficient of 1024 and obtain values of ratio coefficient quantiles 50 (AG channel) and 40 (CT channel). Point signal correction is performed in block multi-threading.

An embodiment of the present application further provides a method for performing detection on an image to recognize a base, including performing base recognition on the basis of a registered image. For example, an image is registered with a fiducial template using the method for registering an image of any of the above embodiments, and then base recognition is performed on the basis of the registered image to obtain an accurate base recognition result.

In other embodiments of the present application, a computer-readable storage medium is further provided, on which a computer program is stored. When the computer program is executed by a processor, the method for registering an image and/or the method for performing detection on an image to recognize a base in any of the above embodiments is implemented.

In another embodiment of the present application, a computer device is further provided. The computer device may include: a memory, configured to store an application program and data generated by execution of the application program; a processor, configured to execute the application program to implement the method for registering an image in any of the above embodiments and/or the method for performing detection on an image to recognize a base in any of the above embodiments.

The processor of the computer device includes at least one processing unit set, each processing unit set includes a plurality of processing units, each processing unit is capable of processing in parallel, and the processing unit set is configured to perform at least the following steps or processes: (i) determining the positions of the plurality of fiducial points in the image in (S10) of the method for registering an image in any of the above embodiments; (ii) Updating each fitting relationship in each direction when performing (S10) of the method for registering an image; (iii) Optimizing each fitting relationship when performing (S20) of the method for registering an image; and (iv) Determining the coordinates of the other regions or positions of the image according to the further updated fiducial point positions when performing (S26) in (S20) of the method for registering an image.

The processing unit set refers to a computing module in a processor composed of a plurality of independent processing units (such as CPU cores, GPU stream processors, FPGA logic units, etc.), which can independently execute different subtasks at the same time. The plurality of processing units process different data or tasks simultaneously rather than sequentially, thereby reducing overall processing time and improving computing efficiency. For details, reference may be made to the relevant description of parallel processing in the image registration embodiments above, which will not be described in detail herein.

It should be noted that for specific implementation of the processor in this embodiment, reference may be made to the corresponding content in the previous text and will not be described in detail herein.

The various embodiments in this description are described in a progressive manner, and each embodiment focuses on differences from other embodiments. The same or similar parts between the various embodiments can be referenced to each other. For the apparatus disclosed in the embodiments, since the apparatus corresponds to the method disclosed in the embodiments, the description is relatively simple. For relevant parts, reference may be made to the description of the method part.

Those skilled in the art may further appreciate that the units and algorithm steps of each example described in conjunction with the embodiments disclosed herein can be implemented by electronic hardware, computer software, or a combination thereof. In order to clearly illustrate the interchangeability of hardware and software, the composition and steps of each example have been generally described in terms of functions in the above description. Whether those functions are performed in hardware or software depends on specific application and design constraints of the technical solution. Those skilled in the art may use different methods to implement the described functions for each specific application, but such implementation should not be considered to be beyond the scope of the present application.

The steps of the methods or algorithms described in conjunction with the embodiments disclosed herein may be implemented directly using hardware, a software module executed by a processor, or a combination thereof. The software module may be placed in a random access memory (RAM), memory, read-only memory (ROM), electrically programmable ROM, electrically erasable programmable ROM, registers, hard disk, removable disk, CD-ROM, or any other form of storage medium known in the technical field. The above description of the disclosed embodiments enables those skilled in the art to implement or use the present application. Various modifications to those embodiments will be readily apparent to those skilled in the art, and the general principles defined herein may be implemented in other embodiments without departing from the spirit or scope of the present application. Therefore, the present application will not be limited to the embodiments shown herein but is to be accorded the widest scope consistent with the principles and novel features disclosed herein.

## Claims

1. A method for image registration, wherein the image is obtained from a detection system for sequencing based on patterned-surface microscopic imaging, the method comprising:
(S10) performing coarse registration of the image on the basis of a fiducial template, comprising:
determining positions of a plurality of fiducial points in the image on the basis of reference positions corresponding to the fiducial points in the fiducial template, establishing one or more fitting relationships based on the positions of the plurality of fiducial points, and updating the positions of the fiducial points in the image based on the fitting relationship;
wherein the fiducial template comprises a reference coordinate system and reflects the same surface region as the image;
the surface region comprises a plurality of adjacent marker zones and reaction zones, the marker zone being provided with a plurality of discrete reactive sites regularly distributed in two or more non-parallel directions, and an intersection of the directions being located within the marker zone;
the marker zone or any direction thereof, together with the surrounding reaction zones, exhibits a specific intensity variation feature on the corresponding detection signal curve;
the fiducial point is located at the intersection of the directions of the marker zone and is positioned according to the intensity variation feature;
at least a portion of the reactive sites appear as bright spots in the image; and
(S20) performing fine registration of the image based on the coarse registration result of (S10) and the bright spots, comprising:
determining the distribution of the bright spots in each of the directions of the marker zone, determining a respective fitting relationship for each of the directions based on the distribution of the bright spots, and further updating the fiducial point positions of the image on the basis of the fitting relationships; and
determining coordinates of other areas or positions of the image based on the updated fiducial point positions, to register the image with the fiducial template.

2. The method according to claim 1, wherein the method comprises at least one of the following features (a) to (d):
(a) the size of the marker zones does not exceed 10% of the surface region;
(b) at least a portion of the reaction zones are discrete, and a marker zone is present between two adjacent reaction zones;
(c) at least a portion of the marker zones are discrete, and a reaction zone is present between two adjacent marker zones; and/or
(d) each reaction zone comprises a plurality of regularly distributed discrete reactive sites, and at least a portion of the reactive sites in the reaction zone appear as bright spots in the image; optionally wherein
the reactive sites in the reaction zone and the marker zone are each independently presented as depressions, and/or
the reactive sites in the reaction zones are more densely distributed than the reactive sites in the marker zones, and/or
the size of individual reactive sites in the reaction zone is smaller than that of individual reactive sites in the marker zone.

3. The method according to any of claim 1 or 2, wherein (S10) comprises:
(a) calculating reference positions corresponding to the fiducial points in the fiducial template;
(b) determining a detection signal curve of a predetermined region in the image where the reference position is located, wherein the predetermined region comprises the intersection of the directions of the marker zones and a portion of reaction zones adjacent to the directions; and
(c) identifying the intensity variation feature of the detection signal curve, and determining the position of the fiducial point based on the position corresponding to the intensity variation feature.

4. The method according to claim 3, wherein the plurality of marker zones are regularly distributed in the surface region along two or more non-parallel linear directions, and (S10) further comprises:
(d1) establishing a fitting relationship in each corresponding direction by using position components of the fiducial points in the respective directions;
(e1) classifying the fiducial points into two categories according to a preset condition, and updating the fitting relationship of each direction based on position components of the fiducial points belonging to a designated category, wherein the preset condition is related to a distance between the fiducial point and the fitting relationship; and
(f1) correcting the position components of the fiducial points in other category on the basis of the updated fitting relationship.

5. The method according to claim 4, wherein the preset condition comprises a plurality of distance thresholds that progressively converge from large to small, including a maximum distance threshold D1 and a second-largest distance threshold D2, and (e1) comprises,
(e11) classifying the fiducial points into two categories according to the distance threshold D1, comprising categorizing fiducial points whose distance to the fitting relationship is less than or equal to D1 as the designated category, and categorizing fiducial points whose distance to the fitting relationship is greater than D1 as the other category;
(e12) updating the fitting relationship in the corresponding direction by using position components of the fiducial points in the designated category obtained from (e11) in each of the directions;
(e13) classifying the fiducial points in the designated category obtained from (e11) into two categories according to the distance threshold D2, comprising categorizing the fiducial points whose distance to the updated fitting relationship obtained from (e12) is less than or equal to D2 as the designated category, and categorizing the fiducial points whose distance to the updated fitting relationship obtained from (e12) is greater than D2 as the other category; and
(e14) updating the fitting relationship in the corresponding direction by using position components of the fiducial points in the designated category obtained from (e13) in each of the directions.

6. The method according to claim 3, wherein the plurality of marker zones are distributed in the surface region along a regular curve, and (S10) further comprises:
(d2) establishing a corresponding curve fitting relationship by using the positions of the fiducial points;
(e2) classifying the fiducial points into two categories according to a preset condition, and updating the curve fitting relationship on the basis of the positions of fiducial points in a designated category, wherein the preset condition is related to a distance between the fiducial point and the curve fitting relationship; and
(f2) correcting positions of fiducial points in the other category on the basis of the updated curve fitting relationship.

7. The method according to claim 6, wherein the preset condition comprises a plurality of distance thresholds that progressively converge from large to small, including a maximum distance threshold D1 and a second-largest distance threshold D2, and (e2) comprises:
(e21) classifying the fiducial points into two categories according to the distance threshold D1, comprising categorizing the fiducial points whose distance to the curve fitting relationship is less than or equal to D1 as the designated category, and categorizing the fiducial points whose distance to the curve fitting relationship is greater than D1 as the other category;
(e22) updating the curve fitting relationship according to positions of the fiducial points in the designated category obtained from (e21);
(e23) classifying the fiducial points in the designated category obtained from (e21) into two categories according to the distance threshold D2, including categorizing the fiducial points whose distance to the updated curve fitting relationship obtained from (e22) is less than or equal to D2 as the designated category, and categorizing those whose distance to the updated curve fitting relationship is greater than D2 as the other category and
(e24) updating the curve fitting relationship according to positions of the fiducial points in the designated category obtained from (e23).

8. The method according to any of claims 1 to 7, wherein (S20) comprises:
(S22) determining the bright spot distribution of each direction of the marker zones on the basis of the positions of the fiducial points obtained from (S10) and the fiducial template, comprising identifying bright spots in multiple regions of each direction;
(S24) determining a fitting relationship for each direction according to the bright spot distribution of the respective direction, and filtering the bright spots to optimize the fitting relationship;
(S26) further updating the fiducial point positions of the image based on the fitting relationships obtained from (S24), and determining coordinates of other regions or positions of the image based on the further updated fiducial point positions, to register the image with the fiducial template.

9. The method according to claim 8, wherein (S22) comprises:
determining, by using position components of the fiducial points obtained from (S10) in the respective direction and the relative positional relationship between the fiducial points and the bright spots included in the fiducial template, a pixel range k1 × k2 where each of the bright spots in multiple regions of each direction is possibly located, wherein k1 and k2 are each independently an odd number greater than 1; and
identifying a bright spot in the pixel range k1 × k2 where a bright spot is possibly located based on a difference in pixel intensity between a central pixel and surrounding pixels.

10. The method according to claim 8 or 9, wherein the preset condition in (S10) is a first preset condition, and (S24) comprises filtering the bright spots according to a second preset condition and updating the fitting relationship of the respective direction on the basis of the bright spots retained after filtering,
wherein the second preset condition is related to a distance between the bright spot and the fitting relationship.

11. The method according to claim 10, wherein the second preset condition comprises a plurality of distance thresholds that progressively converge from large to small, including a maximum distance threshold D21 and a second-largest distance threshold D22, and (S24) comprises:
(S241) filtering the bright spots according to the distance threshold D21, comprising retaining bright spots whose distance to the fitting relationship is less than or equal to D21, and optionally discarding bright spots whose distance to the fitting relationship is greater than the distance threshold D21;
(S243) updating the fitting relationship by using bright spots retained after (S241);
(S245) filtering the bright spots retained after (S241) according to the distance threshold D22, comprising retaining bright spots whose distance to the updated fitting relationship obtained after (S243)is less than or equal to the distance threshold D22, and optionally discarding bright spots whose distance to the updated fitting relationship is greater than the distance threshold D22; and
(S247) updating the fitting relationship based on the bright spots retained after (S245).

12. The method according to any of claims 3 to 11, wherein at least one of the following steps or processes (i) to (iv) is performed in parallel:
(i) the process of determining each of the positions of the plurality of fiducial points in the image in (S10) of claim 3;
(ii) the process of updating respective fitting relationship of each direction in (S10) of claim 4 or 5;
(iii) the process of optimizing respective fitting relationships of each direction in (S20) of claim 8;
(iv) the process of determining each of the coordinates of the other regions or positions of the image on the basis of the further updated fiducial point positions in (S26) of (S20) of claim 8.

13. A method for detecting and calling bases from an image, wherein the image is obtained from a detection system for sequencing based on microscopic imaging of a patterned surface, and wherein a surface region reflected by the image comprises a plurality of adjacent marker zones and reaction zones, the method comprising:
determining signal intensity values at positions corresponding to chemical features in the reaction zones of the image, wherein the image has been registered by using the method according to any of claims 1 to 12; and
calling the type of base introduced at the positions on the basis of the signal intensity values;
wherein optionally the signal intensity values are corrected signal intensity values.

14. A computer device, comprising:
a memory configured to store an application and data generated by execution of the application;
at least one processor configured to execute the application to implement the method for image registration according to any of claims 1 to 12, and/or the method for detecting and calling bases from an image according to claim 13.

15. The computer device according to claim 14, wherein the processor comprises at least one set of processing units, and each processing unit in the set is capable of parallel execution, the set of processing units being configured to perform at least one of the following steps or processes (i)-(iv):
(i) determining positions of the plurality of fiducial points in the image when performing (S10) of the method for image registration according to claim 3;
(ii) updating respective fitting relationships of respective direction when performing (S10) of the method for image registration according to claim 4 or 5;
(iii) optimizing respective fitting relationships of respective direction when performing (S20) of the method for image registration according to claim 8;
(iv) determining coordinates of other regions or positions of the image according to the further updated fiducial point positions when performing (S26) in (S20) of the method for image registration according to claim 8.
